# EUROPEAN PATENT APPLICATION

(11) **EP 4 535 080 A1**
(43) Date of publication of application: **09.04.2025**
(21) Application number: 23811594.3
(22) Date of filing: 09.05.2023
(51) Int. Cl.: G03B 21/00, H04N 5/74

(54) **IMAGE DISPLAY DEVICE**

(30) Priority: 25.05.2022 JP 2022085421
(71) Applicant: Sony Group Corporation, Tokyo 108-0075 (JP)
(72) Inventor: MORI, Keita, Tokyo 108-0075 (JP); OHKAWA, Shingo, Tokyo 108-0075 (JP); MIYAO, Masa, Tokyo 108-0075 (JP)
(74) Representative: D Young & Co LLP
(86) International application number: PCT/JP2023/017408
(87) International publication number: WO 2023/228719

(57) **Abstract**

An image display device according to the present technology includes: a light emitting unit that emits light; a phase modulator that performs spatial light phase modulation on incident light from the light emitting unit; a control unit that causes the phase modulator to execute spatial light phase modulation for generating a first reproduced image in a first reproduced image region and a second reproduced image in a second reproduced image region having a position in an image plane direction different from that of the first reproduced image region as a reproduced image generated by the spatial light phase modulation for the incident light; a projection lens that projects the first reproduced image; and a light shielding unit that shields the second reproduced image such that the second reproduced image is not projected by the projection lens.

## Description

### TECHNICAL FIELD

The present technology relates to an image display device, and particularly relates to an image display technology in which a reproduced image having a desired light amount distribution is generated by applying spatial light phase modulation to incident light from a light emitting unit, and the reproduced image is projected by a projection lens.

### BACKGROUND ART

For example, as disclosed in Patent Document 1 below, a technique for generating an image (reproduced image) having a desired light amount distribution on a predetermined reproduction surface by spatial light phase modulation is known.

As a phase modulator that performs spatial light phase modulation, for example, a liquid crystal panel or the like is used. When the driving state (for example, an alignment state of liquid crystal molecules) of the pixel is changed for the pixel constituting the phase modulator, the phase modulation amount (phase delay amount) for the incident light in the pixel changes. At this time, as the driving state of the pixel changes, the diffraction angle of the light incident on the pixel changes. Therefore, in the phase modulator, the emission angle of the emitted light, that is, the bending amount of light can be set for each pixel by setting the phase modulation amount for each pixel. By setting such a bending amount of light for each pixel, it is possible to make light dense in a certain region on the reproduction surface and make light sparse in another region, and it is possible to form a desired light amount distribution on the reproduction surface. That is, it is possible to generate a reproduced image having a desired light amount distribution.

Here, examples of the spatial light modulation for image reproduction include spatial light amplitude modulation. In the spatial light amplitude modulation, a reproduced image having a desired light amount distribution is generated using an amplitude modulator such as a digital micro mirror device (DMD) configured to be able to change transmittance and reflectance of incident light for each pixel.

In a case where the image reproduction by the spatial light phase modulation as described above is performed with respect to the image reproduction by such spatial light amplitude modulation, there is no need to absorb or reflect a part of the incident light in generating the reproduced image by the desired light amount distribution, and thus there is an advantage that utilization efficiency of the incident light can be improved.

Note that, regarding related conventional techniques, Patent Document 2 below can also be mentioned in addition to Patent Document 1 described above. Patent Document 2 describes a technique for generating an image on a predetermined reproduction surface by spatial light modulation of light from a light source with a hologram recording medium.

### CITATION LIST

### PATENT DOCUMENT

Patent Document 1: Japanese Unexamined Patent Application Publication No. 2020-503538
Patent Document 2: Japanese Patent Application Laid-Open No. 2012-58481

### SUMMARY OF THE INVENTION

### PROBLEMS TO BE SOLVED BY THE INVENTION

As described above, image reproduction by spatial light phase modulation has an advantage that light utilization efficiency is high, but as a contradiction, there is a disadvantage that the total light amount of the reproduced image cannot be adjusted by the phase modulator alone. Therefore, in a case where an image display device that displays a reproduced image generated by the phase modulator as a projection image is assumed, the total light amount of the target image (image to be displayed) cannot be appropriately reproduced with respect to the projection image, which causes a decrease in reproducibility of the target image.

In addition, in a case where image reproduction by spatial light phase modulation is performed, image reproduction cannot be appropriately performed in a case where a bending amount of light exceeding a diffraction limit of the phase modulator is required. Specifically, in a case where even a part of the phase modulator has a region where light cannot be bent at a target position on the reproduction surface, light from the region is superimposed as a noise component on the reproduced image. That is, a component of aliasing noise (aliasing) not included in the target image is superimposed on the reproduced image, which causes deterioration in image quality of the display image. This can be regarded that the reproducibility of the target image is deteriorated in that a component not included in the target image is superimposed on the display image.

The present technology has been made in view of the above circumstances, and an object thereof is to improve reproducibility of a display image with respect to a target image in an image display device that projects a reproduced image generated by spatial light phase modulation to display an image.

### SOLUTIONS TO PROBLEMS

An image display device according to the present technology includes: a light emitting unit that emits light; a phase modulator that performs spatial light phase modulation on incident light from the light emitting unit; a control unit that causes the phase modulator to execute spatial light phase modulation for generating a first reproduced image in a first reproduced image region and a second reproduced image in a second reproduced image region having a position in an image plane direction different from that of the first reproduced image region as a reproduced image generated by the spatial light phase modulation for the incident light; a projection lens that projects the first reproduced image; and a light shielding unit that shields the second reproduced image such that the second reproduced image is not projected by the projection lens.

Accordingly, in a case where the first reproduced image is displayed as a projection image, unnecessary light can be discarded to the second reproduced image side. For example, in a case where the actual total light amount of the first reproduced image exceeds the target total light amount, it is possible to appropriately reproduce the total light amount of the image by discarding light exceeding the target total light amount to the second reproduced image side, or to prevent the occurrence of aliasing in the first reproduced image by discarding light requiring a bending amount exceeding the diffraction limit to the second reproduced image side.

### BRIEF DESCRIPTION OF DRAWINGS

Fig. 1 is a diagram illustrating a configuration example of an image display device as a first embodiment.
Fig. 2 is an explanatory diagram of reproducibility of a total light amount by a phase modulator.
Fig. 3 is an explanatory diagram of a diffraction limit of the phase modulator.
Fig. 4 is an explanatory diagram of an outline of a phase modulation method as an embodiment.
Fig. 5 is a diagram for explaining an internal configuration example of a control unit included in the image display device as the first embodiment.
Fig. 6 is a flowchart illustrating a processing procedure example for realizing a phase modulation method as an embodiment.
Fig. 7 is a flowchart illustrating an example of processing of specifying a non-reproducible region in an embodiment.
Fig. 8 is an explanatory diagram of preconditions in the description of Fig. 7.
Fig. 9 is a diagram illustrating an example of region division in processing of specifying a non-reproducible region as an embodiment.
Fig. 10 is a diagram illustrating an example of region movement in processing of specifying a non-reproducible region as an embodiment.
Fig. 11 is an explanatory diagram of a method of specifying a non-reproducible region based on an allowable light beam moving distance.
Fig. 12 is an explanatory diagram of a configuration in which a partial region does not satisfy a maximum diffraction angle limitation of the phase modulator in both a first reproduced image and a second reproduced image.
Fig. 13 is an explanatory diagram of a case where a target total light amount of the first reproduced image cannot be reproduced.
Fig. 14 is a diagram for explaining an internal configuration example of a control unit included in an image display device as a second embodiment.
Fig. 15 is a flowchart illustrating an example of processing executed by a light amount control unit included in the image display device as the second embodiment.
Fig. 16 is a diagram illustrating a configuration example of an image display device as a modification of the second embodiment.
Fig. 17 is an explanatory diagram of a configuration in which an entire region of the first reproduced image satisfies a maximum diffraction angle limitation of the phase modulator, but a partial region of the second reproduced image does not satisfy the maximum diffraction angle limitation of the phase modulator.
Fig. 18 is an explanatory diagram of a case where a target total light amount of the first reproduced image cannot be reproduced in the case of adopting the configuration of Fig. 17.
Fig. 19 is an explanatory diagram of a configuration in which a partial region of the first reproduced image does not satisfy a maximum diffraction angle limitation of a phase modulator, and an entire region of the second reproduced image satisfies the maximum diffraction angle limitation of the phase modulator.
Fig. 20 is an explanatory diagram of a case where a target total light amount of the first reproduced image cannot be reproduced in the case of adopting the configuration of Fig. 19.
Fig. 21 is an explanatory diagram of a configuration in which an entire region satisfies a maximum diffraction angle limitation of the phase modulator in both the first reproduced image and the second reproduced image.
Fig. 22 is an explanatory diagram of a case where a target total light amount of the first reproduced image cannot be reproduced in the case of adopting the configuration of Fig. 21.
Fig. 23 is a diagram illustrating an image of processing for making a frame in which a target total light amount cannot be reproduced less noticeable by prefetching frames.
Fig. 24 is an explanatory diagram of a configuration in which an entire region of the reproduced image satisfies the limitation of the upper limit diffraction angle by an angle smaller than the maximum diffraction angle of the phase modulator.
Fig. 25 is a diagram illustrating a configuration example of an image display device as a third embodiment.
Fig. 26 is an explanatory diagram of another example of an irradiation direction of zero-order light in the third embodiment.
Fig. 27 is a diagram illustrating a configuration example of an image display device as a fourth embodiment.
Fig. 28 is an explanatory diagram of an example of region division of a phase modulator in the fourth embodiment.
Fig. 29 is a diagram for explaining an internal configuration example of a control unit included in the image display device as the fourth embodiment.
Fig. 30 is a view illustrating a setting example of a second reproduced image region for each wavelength band.
Fig. 31 is an explanatory diagram of an example in which a plurality of second reproduced image regions is set at different positions in an image plane direction.
Fig. 32 is an explanatory diagram in a case where only one second reproduced image region is set.
Fig. 33 is an explanatory diagram of a modification of a light shielding unit.

### MODE FOR CARRYING OUT THE INVENTION

Hereinafter, embodiments according to the present technology will be described in the following order with reference to the accompanying drawings.
<1. First Embodiment>
   (1-1. Outline of Device Configuration)
   (1-2. Outline of Phase Modulation Method as Embodiment)
   (1-3. Specific Solutions to Problem I and Problem II)
   (1-4. Processing Procedure)
<2. Second Embodiment>
<3. Third Embodiment>
<4. Fourth Embodiment>
<5. Modification>
<6. Summary of Embodiments>
<7. Present Technology>

### <1. First Embodiment>

### (1-1. Outline of Device Configuration)

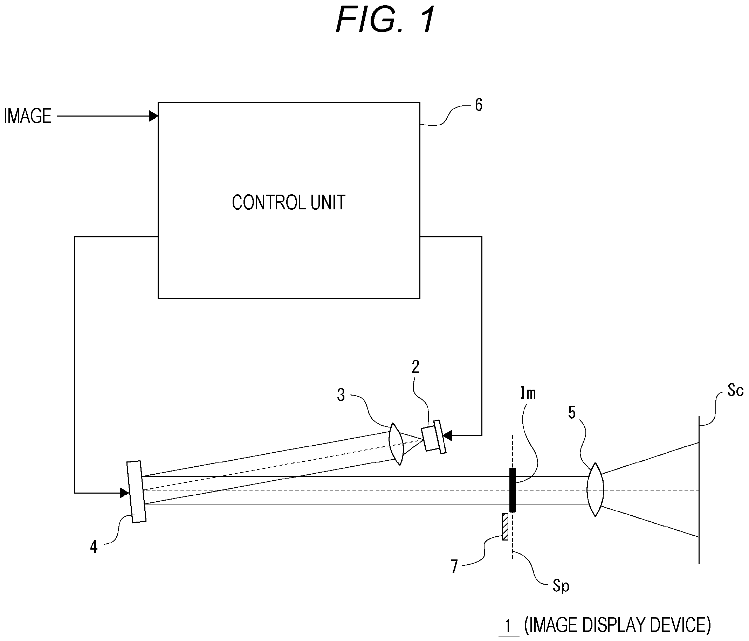

Fig. 1 is a diagram illustrating a configuration example of an image display device 1 as an embodiment of an image display device according to the present technology.

As illustrated in the drawing, the image display device 1 includes a light emitting unit 2 that emits light, a collimation lens 3 that condenses light emitted from the light emitting unit 2 and emits parallel light, a phase modulator 4 that performs spatial light phase modulation on incident light from the collimation lens 3, in other words, incident light from the light emitting unit 2 via the collimation lens 3, a projection lens 5 that projects a reproduced image generated by the spatial light phase modulation by the phase modulator 4 onto a predetermined projection surface such as a surface of the screen Sc, a control unit 6 that performs light emission control of the light emitting unit 2 and drive control of the phase modulator 4, and a light shielding unit 7.

In the image display device 1, the light emitting unit 2 includes one or a plurality of light emitting elements and emits light. As the light emitting element in the light emitting unit 2, for example, it is conceivable to use a semiconductor laser, a light emitting diode (LED), or the like.

In addition, in the image display device 1, for example, a reflective liquid crystal panel is used as the phase modulator **4.** The phase modulator 4 performs spatial light phase modulation on the incident light from the light emitting unit 2 to reproduce a desired image (light amount distribution) on the predetermined reproduction surface Sp, and the reproduced image is projected on the projection surface by the projection lens 5 to display the image on the projection surface. Specifically, the control unit 6 calculates, on the basis of the input image, a phase modulation pattern for generating a reproduced image Im for the input image, that is, an image obtained by reproducing a light amount distribution of the input image. The phase modulation pattern here means a phase modulation amount of each pixel of the phase modulator 4. When the phase modulator 4 is driven according to the phase modulation pattern, a reproduced image Im of the input image is obtained on the reproduction surface Sp, and the reproduced image Im is projected on the projection surface by the projection lens 5, whereby the reproduced image of the input image is displayed on the projection surface.

Here, for the calculation of the phase modulation pattern for generating an image having a desired light amount distribution as the reproduced image Im at a desired position, various known methods, for example, a calculation method of a computer generated hologram (CGH) can be adopted. Specifically, examples of a calculation method of CGH include a calculation method using a Gerchberg-Saxton algorithm, a Wirtinger Hologram algorithm, a Stochastic Gradient Descent (SGD) algorithm, a calculation method using a learning model by deep learning, and the like as disclosed in Patent Document 1 described above. Here, the calculation method of the CGH is not limited to the method using the principle of diffraction, and it is also possible to adopt a method using refraction of light such as a freeform method.

### (1-2. Outline of Phase Modulation Method as Embodiment)

Here, as described above, image reproduction by spatial light phase modulation has an advantage of high light utilization efficiency, but as a contradiction, there is a disadvantage that the phase modulator 4 alone cannot adjust the total light amount of the reproduced image. That is, the phase modulator 4 alone cannot reproduce the total light amount of the input image.

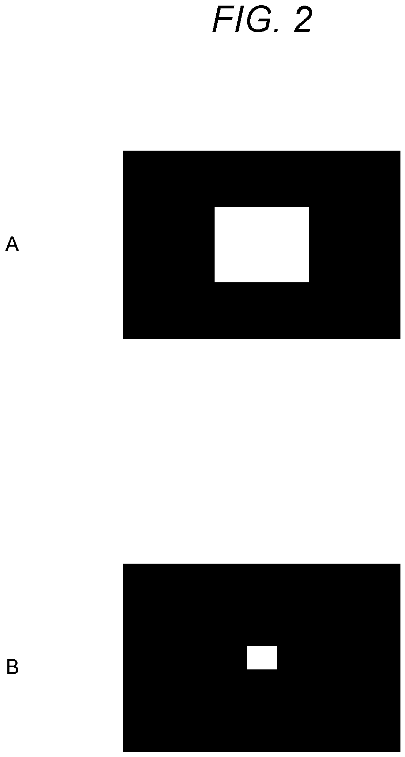

Fig. 2 is an explanatory diagram of this point.

For example, it is assumed that there are two images having different sizes of white regions as illustrated as an image having one white region on a black background. An image having a larger white region (Fig. 2A) is defined as a first image, and an image having a smaller white region (Fig. 2B) is defined as a second image. At this time, each pixel in the white region has the same luminance value of the maximum value (for example, 255) (that is, the brightness of the white regions is the same).

In the first and second images, since the brightness of the white region is the same, the total light amount of the first and second images is "first image > second image". In this manner, the total light amount of the light amount distribution to be reproduced as the reproduced image, that is, the target total light amount of the reproduced image can vary depending on the content of the input image.

Meanwhile, in a case where the phase modulator 4 performs spatial light phase modulation to generate the reproduced image, it can be considered that the total light amount is preserved between the incident light and the reproduced image (in a case where attenuation of light due to reflectance, transmittance, diffraction efficiency, and the like of the phase modulator 4 is not considered). Therefore, there is no guarantee that the total light amount of the reproduced image generated by the spatial light phase modulation matches the target total light amount described above, and thus there is no guarantee that the phase modulator 4 alone can reproduce the total light amount of the input image.

If the total light amount of the reproduced image cannot be matched with the target total light amount, the total light amount of the target image (image to be displayed) cannot be appropriately reproduced with respect to the projection image (display image), which causes a decrease in reproducibility of the target image.

In addition, in a case where image reproduction by spatial light phase modulation is performed, image reproduction cannot be appropriately performed in a case where a bending amount of light exceeding a diffraction limit of the phase modulator 4 is required.

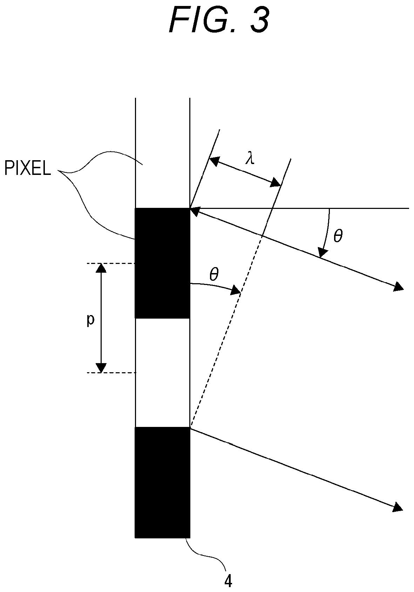

First, the diffraction limit of the phase modulator 4 will be described with reference to Fig. 3.

As illustrated in the drawing, when the pixel pitch of the phase modulator 4 is p, the wavelength of light incident on the phase modulator 4 is λ, and the diffraction limit is θ, the diffraction limit θ is expressed by "2p·sinθ = λ".

In a case where the reproduced image Im having the same size as the phase modulation region of the phase modulator 4 is to be generated on the reproduction surface Sp separated from the phase modulator 4 by the focal length f in the optical axis direction, the required maximum bending angle of the light is a case where the light is bent in a diagonal direction such as from the uppermost left pixel of the phase modulator 4 to the lowermost right position of the reproduced image Im.

Here, in a case where p = 4.25 µm and λ = 450 nm, the diffraction limit θ is 3.5 degrees. Then, assuming a case where p = 4.25 µm and λ = 450 nm, and assuming that the number of horizontally effective pixels of the phase modulator 4 = 1920 and the number of vertically effective pixels = 1080, the horizontal width of the reproduced image Im = 8.16 mm and the vertical width = 4.59 mm, and the diagonal length of the reproduced image Im is 9.36 mm.

At this time, if the focal length f = 75 mm, the maximum bending angle of the light in the spatial light phase modulation is 7.1 degrees. This exceeds the diffraction limit θ = 3.5 degrees in the case where p = 4.25 µm and λ = 450 nm. In this case, light cannot be completely bent in at least a partial region of the phase modulator 4, and light from the partial region is superimposed as a noise component on the reproduced image Im. That is, a component of aliasing noise (aliasing) that is not included in the target image is superimposed on the reproduced image Im, which causes deterioration in image quality of the display image. This can be said to decrease the reproducibility of the target image in that components not included in the target image are superimposed on the display image.

At this time, if the focal length f is increased, that is, the reproduction surface Sp is set farther, the maximum bending angle of the light can be reduced, and thus the occurrence of aliasing can be prevented. However, when the focal length f is increased, the image quality of the reproduced image Im is deteriorated, and the size of the optical system is increased, which may cause an increase in the device size.

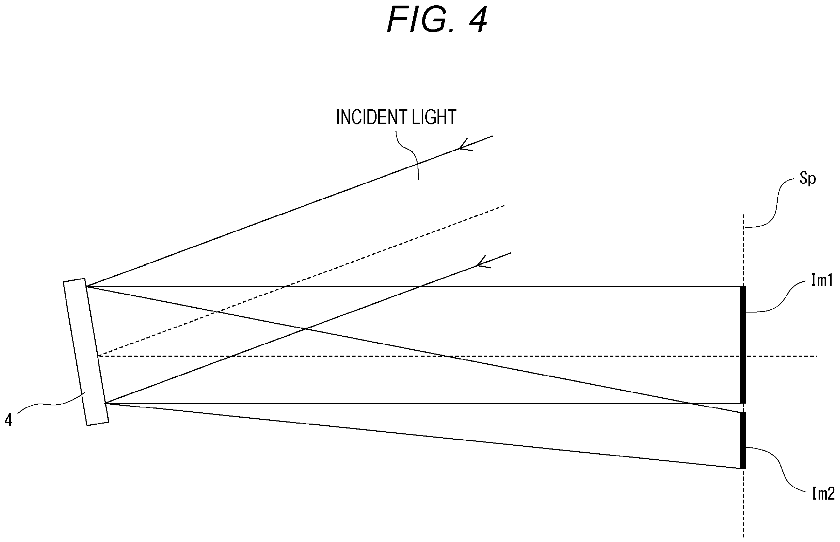

Therefore, in the present embodiment, in order to solve the two problems described above, that is, the problem that the total light amount of the target image cannot be appropriately reproduced (hereinafter referred to as "problem I") and the problem that aliasing occurs and image quality deteriorates in a case where the maximum bending angle of light by the spatial light phase modulation exceeds the diffraction limit θ of the phase modulator 4 (hereinafter referred to as "problem II"), as illustrated in Fig. 4, a method of generating the second reproduced image Im2 at an image plane direction position different from the first reproduced image Im1 by the spatial light phase modulation by the phase modulator 4 and discarding the light to the second reproduced image Im2 side is adopted.

Here, the image plane direction means a direction parallel to the reproduction surface of the first reproduced image Im1.

Specifically, in the present embodiment, as the reproduced image Im generated by the spatial light phase modulation with respect to the incident light, the phase modulator 4 is caused to execute spatial light phase modulation for generating a first reproduced image Im1 in a first reproduced image region on the reproduction surface Sp and a second reproduced image Im2 in a second reproduced image region having a position in the image plane direction different from that of the first reproduced image region.

In the present example, the light shielding unit 7 illustrated in Fig. 1 is arranged in a region where the second reproduced image Im2 is generated. The light shielding unit 7 shields the second reproduced image Im2 so that the second reproduced image Im2 is not projected by the projection lens **5.** Specifically, the light shielding unit 7 in the present example is configured as a light absorbing unit that absorbs light forming the second reproduced image Im2, and shields the second reproduced image Im2 so that the second reproduced image Im2 is not projected by the projection lens 5. In this case, the light shielding unit 7 is configured as, for example, a member to which low reflection coating such as black is applied to prevent reflection, a member constituted by a low reflection material, a member having a low reflection structure, or the like.

Note that the light shielding surface as the light absorbing surface or the like in the light shielding unit 7 does not necessarily match the image plane of the second reproduced image Im2, and may be located on the front side or the back side of the image plane of the second reproduced image Im2 as long as the second reproduced image Im2 can be shielded by the projection lens 5 so that the second reproduced image Im2 is not projected (that is, it is not always necessary to match the focused image plane).

Since the light shielding unit 7 shields the second reproduced image Im2, it is possible to discard at least a part of the light incident on the phase modulator 4 toward the second reproduced image Im2 side.

As described above, by causing the phase modulator 4 to execute spatial light phase modulation for generating the first reproduced image Im1 in the first reproduced image region on the reproduction surface Sp and generating the second reproduced image Im2 in the second reproduced image region having a position in the image plane direction different from that of the first reproduced image region, and further providing the light shielding unit 7 that shields the second reproduced image Im2, in a case where the first reproduced image Im1 is displayed as a projection image, unnecessary light can be discarded toward the second reproduced image Im2 side without being projected by the projection lens 5. For example, in a case where the actual total light amount of the first reproduced image Im1 exceeds the target total light amount, it is possible to appropriately reproduce the total light amount of the image by discarding light exceeding the target total light amount to the second reproduced image Im2 side, or to prevent the occurrence of aliasing in the first reproduced image Im1 by discarding light requiring a bending amount exceeding the diffraction limit to the second reproduced image Im2 side.

Therefore, in the image display device that projects the reproduced image Im generated by the spatial light phase modulation to display an image, it is possible to improve the reproducibility of the display image with respect to the target image.

### (1-3. Specific Solutions to Problem I and Problem II)

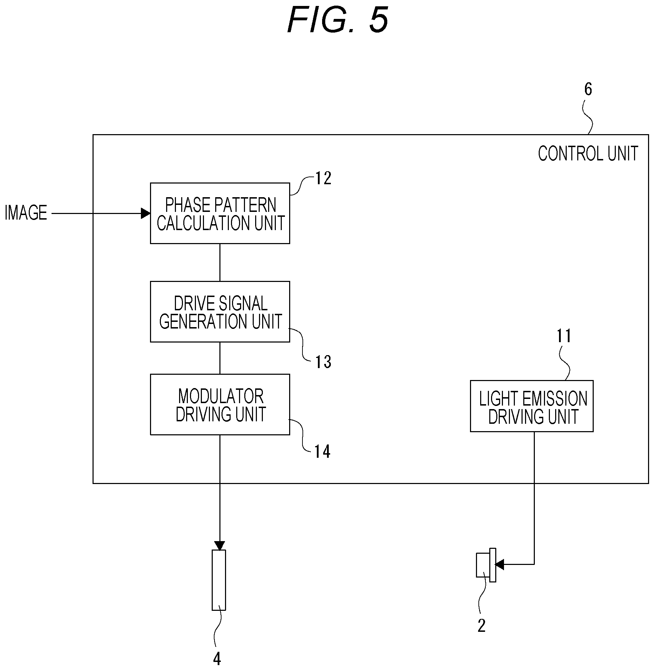

Fig. 5 is a diagram for explaining an internal configuration example of the control unit 6 illustrated in Fig. 1, and illustrates the light emitting unit 2 and the phase modulator 4 illustrated in Fig. 1 together with the internal configuration example of the control unit 6.

As illustrated in the drawing, the control unit 6 includes a light emission driving unit 11, a phase pattern calculation unit 12, a drive signal generation unit 13, and a modulator driving unit 14.

The light emission driving unit 11 drives the light emitting element in the light emitting unit 2 to emit light. Specifically, the light emission driving unit 11 drives the light emitting element to emit light such that the light emission amount of the light emitting unit 2 becomes a constant light emission amount.

On the basis of the input image, the phase pattern calculation unit 12 calculates a phase modulation pattern of the phase modulator 4 for reproducing the light amount distribution of the input image as the first reproduced image Im1. In addition, in particular, in the case of the present embodiment, the phase pattern calculation unit 12 also calculates the phase modulation pattern for generating the second reproduced image Im2 described above, which will be described again.

As described above, the Gerchberg-Saxton algorithm, the Wirtinger Hologram algorithm, or the like can be adopted for the calculation of the phase modulation pattern for generating the reproduced image Im having a desired light amount distribution at a desired position.

The drive signal generation unit 13 receives the phase modulation pattern calculated by the phase pattern calculation unit 12 and generates a drive signal for the phase modulator 4. That is, it is a drive signal for each pixel of the phase modulator 4 in order to realize the phase modulation pattern.

The modulator driving unit 14 includes a driver circuit that drives each pixel of the phase modulator 4, and drives each pixel of the phase modulator 4 on the basis of a drive signal input from the drive signal generation unit 13.

As a result, in the phase modulator 4, spatial light phase modulation according to the phase modulation amount for each pixel indicated by the phase modulation pattern is performed.

First, a method for solving the problem I will be described.

The problem I basically adopts a method of calculating a target total light amount of the first reproduced image Im1 on the basis of the input image, and irradiating the second reproduced image region with light corresponding to a light amount determined on the basis of the target total light amount (that is, discarding the light as the second reproduced image Im2). Specifically, in a case where the spatial light phase modulation by the phase modulator 4 is not performed on the incident light, the total light amount of the light amount distribution formed in the first reproduced image region is acquired as the actual total light amount, and the phase modulator 4 is caused to execute the spatial light phase modulation for irradiating the second reproduced image region with light corresponding to the difference light amount calculated as the difference between the target total light amount and the actual total light amount.

As a result, in a case where the actual total light amount of the first reproduced image exceeds the target total light amount, it is possible to discard light exceeding the target total light amount to the second reproduced image side.

For the problem II, first, the target light amount distribution of the first reproduced image Im1 is calculated on the basis of the input image, and a region on the phase modulator 4 where light cannot be completely bent into the first reproduced image region in a case where the target light amount distribution is reproduced in the first reproduced image region is specified as a non-modulatable region. Then, the phase modulator is caused to execute spatial light phase modulation for irradiating the second reproduced image region with the incident light to the non-modulatable region.

This prevents the occurrence of aliasing in the first reproduced image Im1.

### (1-4. Processing Procedure)

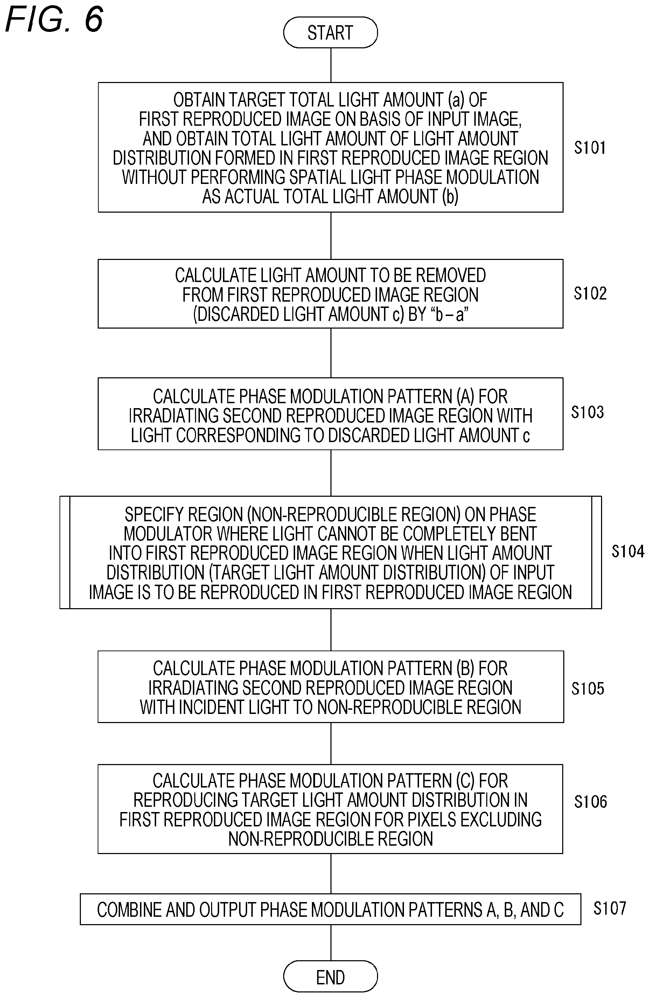

The phase pattern calculation unit 12 executes the processing illustrated in the flowchart of Fig. 6 in order to implement the above-described method for solving Problem I and Problem II.

In Fig. 6, in step S101, the phase pattern calculation unit 12 obtains the target total light amount (a) of the first reproduced image Im1 on the basis of the input image, and obtains the total light amount of the light amount distribution formed in the first reproduced image region without performing the spatial light phase modulation as the actual total light amount (b).

Note that, in a case where it is assumed that the light emission amount of the light emitting unit 2 is constant as in the present example, it is not essential to obtain the actual total light amount b by calculation, and a predetermined value may be acquired.

In step S102 subsequent to step S101, the phase pattern calculation unit 12 calculates the light amount to be removed from the first reproduced image region (discarded light amount c) by "b - a". Then, in subsequent step S103, the phase pattern calculation unit 12 calculates a phase modulation pattern (A) for irradiating the second reproduced image region with light corresponding to the discarded light amount c. As a result, a phase modulation pattern for solving the problem I is obtained.

In step S104 subsequent to step S103, the phase pattern calculation unit 12 performs the above-described processing of specifying the non-reproducible region. That is, when the light amount distribution (target light amount distribution) of the input image is to be reproduced in the first reproduced image region, a region on the phase modulator 4 where light cannot be completely bent into the first reproduced image region is specified.

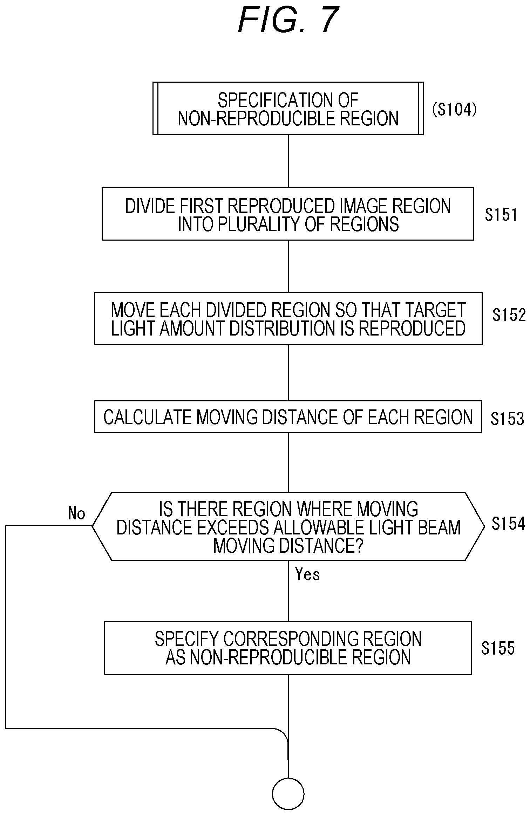

Fig. 7 is a flowchart illustrating an example of processing of specifying a non-reproducible region.

Here, in the description of Fig. 7, the following matters are assumed for the description.

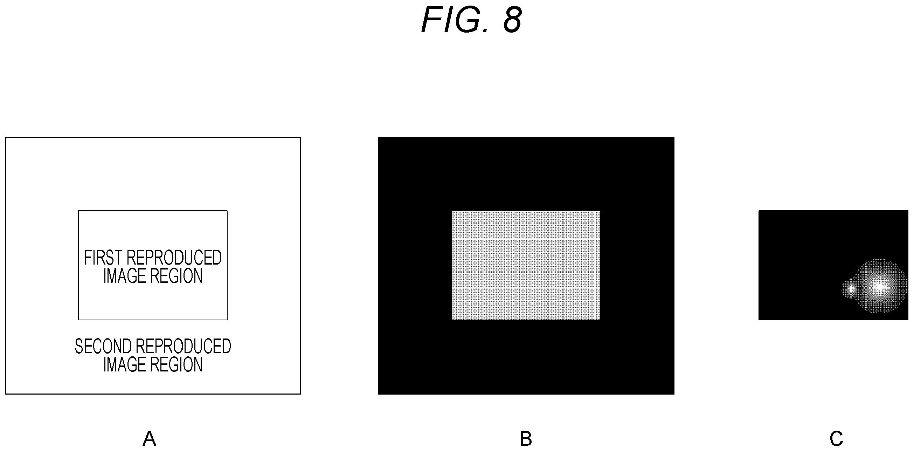

That is, as illustrated in Fig. 8A, the second reproduced image region is a region covering the outer periphery of the first reproduced image region. In addition, in a case where the phase modulator 4 does not perform the spatial light phase modulation on the incident light, it is assumed that a uniform light amount distribution (portion indicated by gray in the drawing) as illustrated in Fig. 8B is obtained in the first reproduced image region. Further, the target light amount distribution of the first reproduced image Im1 to be generated in the first reproduced image region is a light amount distribution having a white region only in the lower right portion of the first reproduced image region as illustrated in Fig. 8C.

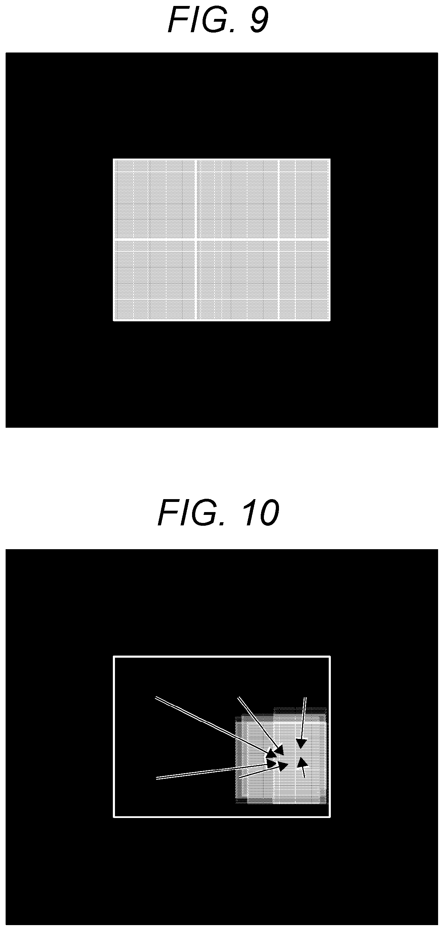

In Fig. 7, the phase pattern calculation unit 12 divides the first reproduced image region into a plurality of regions in step S151. Fig. 9 illustrates an example of region division at this time. Here, an example in which the first reproduced image region is divided into six rectangles is illustrated, but the number of divisions and the shapes of the regions are not limited thereto. In addition, the areas of the divided regions may not be the same.

As the number of divisions increases, the resolution of the light amount distribution that can be realized can be increased and the light utilization efficiency can be increased, but there is a trade-off relationship that the light beam movement calculation amount increases.

In Fig. 7, in step S152 following step S151, the phase pattern calculation unit 12 moves each divided region so that the target light amount distribution is reproduced.

In the present example, since the target light amount distribution illustrated in Fig. 8C is assumed, each region is moved as illustrated in Fig. 10 by performing the processing of step S152. Here, for the region movement in step S152, optimization calculation such as Optimal Transport is used.

In step S153 following step S152, the phase pattern calculation unit 12 calculates the moving distance of each region. In Fig. 10, the moving distance calculated for each region is represented by a single arrow.

In step S154 following step S153, the phase pattern calculation unit 12 determines whether or not there is a region where the moving distance exceeds the allowable light beam moving distance.

The allowable light beam moving distance indicates an allowable value determined from the diffraction limit θ of the phase modulator 4 and the distance d from the phase modulator 4 to the first reproduced image region with respect to the moving amount of the divided region, and is calculated by d·tanθ.

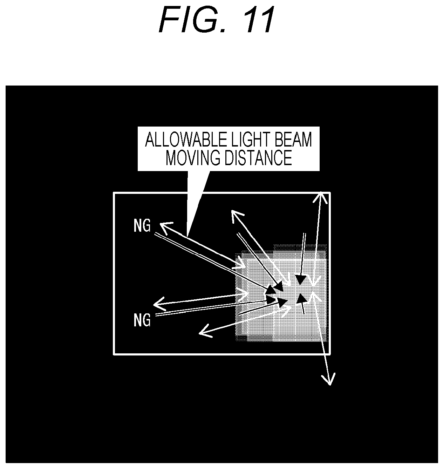

In Fig. 11, the allowable light beam moving distance is represented by a double-headed arrow, and the allowable light beam moving distance is compared for each moving distance of each region calculated in Fig. 10. The example of Fig. 11 illustrates a case where the moving distance of each of the regions where the original positions are the uppermost left and the lowermost left exceeds the allowable light beam moving distance.

In step S154, in a case where there is a region in which the moving distance exceeds the allowable light beam moving distance, the phase pattern calculation unit 12 performs processing of specifying the corresponding region as the non-reproducible region in step S155, and ends the processing of step S104 (non-reproducible region specifying processing).

Meanwhile, in a case where it is determined in step S154 that there is no region where the moving distance exceeds the allowable light beam moving distance, the phase pattern calculation unit 12 ends the processing of step S104.

Note that the method of specifying the non-reproducible region described here is merely an example, and is not limited to the method. For example, it is also conceivable to calculate a phase modulation pattern for realizing the target light amount distribution of the first reproduced image Im1 and specify the non-reproducible region on the basis of the phase modulation pattern.

In Fig. 6, the phase pattern calculation unit 12 advances the processing to step S105 in response to the execution of the processing of step S104, and calculates a phase modulation pattern (B) for irradiating the second reproduced image region with the incident light to the non-reproducible region.

Then, in step S106 subsequent to step S105, the phase pattern calculation unit 12 calculates a phase modulation pattern (C) for reproducing the target light amount distribution in the first reproduced image region for the pixels excluding the non-reproducible region, performs processing of combining and outputting the phase modulation patterns A, B, and C in step S107 subsequent thereto, and terminates the series of processing illustrated in Fig. **6****.**

As a result, the phase modulator 4 is driven according to the phase modulation pattern for solving the problem I and the problem II and obtaining the first reproduced image Im1 that reproduces the light amount distribution of the input image. That is, for the first reproduced image Im1, the occurrence of aliasing can be prevented while appropriately reproducing the total light amount of the input image, and the reproducibility of the display image with respect to the target image can be improved.

Here, in order to solve the problem I, it is also conceivable to adopt a method of adjusting the total light amount of the first reproduced image Im1 by controlling the light emission amount of the light emitting unit 2 or adjusting the total light amount of the first reproduced image Im1 by providing an amplitude modulator that performs spatial light amplitude modulation on the first reproduced image Im1.

However, in the case of adjustment with the light emission amount of the light emitting unit 2, it is necessary to add a control circuit for controlling the light emission amount of the light emitting unit 2, and also in the case of adjustment using an amplitude modulator, it is necessary to add an amplitude modulator.

By adopting a method of discarding light by spatial light phase modulation by the phase modulator 4 as in the method of the present embodiment described above, it is possible to eliminate the need to add the control circuit and the amplitude modulator in solving the problem I, and it is possible to reduce the size and cost of the optical system.

Further, in regard to the problem II, aliasing may occur in a case where a partial region in the first reproduced image Im1 does not satisfy the maximum diffraction angle limitation of the phase modulator 4.

Here, the fact that the entire region of the reproduced image satisfies the maximum diffraction angle limitation of the phase modulator means that light from each pixel can be irradiated to any position in the reproduced image in a case where a condition in which the angle (maximum diffraction angle) at which the diffraction limit is set as the upper limit angle is imposed for the light emission angle from each pixel of the phase modulator.

Therefore, in a case where the entire region in the first reproduced image Im1 satisfies the maximum diffraction angle limitation of the phase modulator 4, it is conceivable that the processing for preventing the occurrence of aliasing is not executed. Specifically, the processing of steps S104 to S106 described in Fig. 6 is not executed.

Note that, in a case where the processing for preventing the occurrence of aliasing is performed, in a case where a partial region of the second reproduced image Im2 does not satisfy the maximum diffraction angle limitation of the phase modulator 4, there may be a case where light that becomes aliasing of the first reproduced image Im1 cannot be completely discarded to the second reproduced image Im2 side. In this way, light that cannot be discarded to the second reproduced image side can be superimposed as aliasing on the first reproduced image Im1 side, and thus, it is conceivable to take a measure.

Therefore, in a case where the light that becomes the aliasing of the first reproduced image Im1 cannot be completely discarded to the second reproduced image Im2 side as described above, it is conceivable to irradiate light that cannot be completely discarded to the second reproduced image Im2 side so as to be dispersed over a wide range to the first reproduced image region side.

### <2. Second Embodiment>

Next, the second embodiment will be described. In the second embodiment, measures are taken against a decrease in reproducibility of the total light amount of the first reproduced image Im1 caused by a partial region not satisfying the maximum diffraction angle limitation of the phase modulator 4 in the first reproduced image Im1 and the second reproduced image Im2.

Note that, in the following description, the same reference signs are given to portions similar to those already described, and description thereof is omitted.

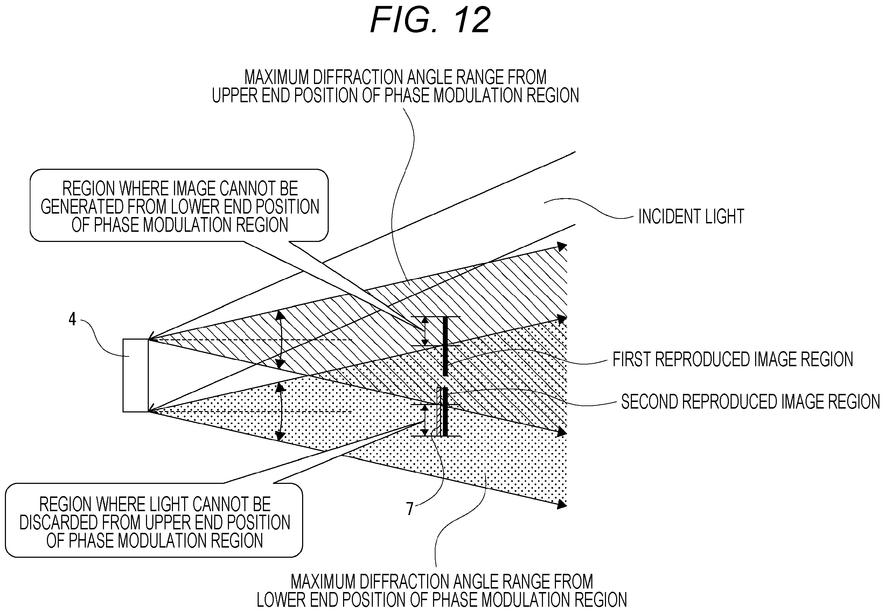

Fig. 12 is an explanatory diagram in a case where a partial region does not satisfy the maximum diffraction angle limitation of the phase modulator 4 in both the first reproduced image Im1 and the second reproduced image Im2.

In Fig. 12, a hatched range represents the maximum diffraction angle range from the upper end position of the phase modulation region of the phase modulator 4, and a dotted range represents the maximum diffraction angle range from the lower end position of the phase modulation region of the phase modulator 4.

Although only the maximum diffraction angle range in the vertical direction is illustrated here for the sake of explanation, the required bending angle of light is maximized in the diagonal direction as described above, and in practice, the maximum diffraction angle range should be considered for all directions obliquely up, down, left, and right.

In the example in the drawing, the entire first reproduced image region falls within the maximum diffraction angle range from the upper end position of the phase modulation region. This means that light can be completely bent from the upper end position of the phase modulation region to the entire region of the first reproduced image region when considered only in the vertical direction.

Meanwhile, with respect to the maximum diffraction angle range from the lower end position of the phase modulation region, in the first reproduced image region, only a partial region overlaps with the maximum diffraction angle range from the lower end position, and the remaining region deviates from the maximum diffraction angle range from the lower end position. In the first reproduced image region, the region deviated in this manner is a region where an image cannot be generated from the lower end position of the phase modulation region.

Furthermore, in the drawing, the entire second reproduced image region falls within the maximum diffraction angle range from the lower end position of the phase modulation region, which means that light can be completely bent from the lower end position of the phase modulation region to the entire region of the second reproduced image region when considered only in the vertical direction.

Meanwhile, in the second reproduced image region, only a partial region overlaps with the maximum diffraction angle range from the upper end position of the phase modulation region, and the remaining region deviates from the maximum diffraction angle range from the upper end position. Therefore, in the second reproduced image region, the region deviated in this manner becomes a region where light cannot be discarded from the upper end position of the phase modulation region.

Here, the fact that the partial region of the first reproduced image Im1 does not satisfy the maximum diffraction angle limitation means that there is light that cannot be completely bent even if the light is tried to be bent into the first reproduced image region. For this reason, in a case where a part of the first reproduced image Im1 does not satisfy the maximum diffraction angle limitation, even if an attempt is made to reproduce an entirely bright image such as an all-white image with the first reproduced image Im1, there may be a case where the image cannot be reproduced.

Meanwhile, the fact that the partial region of the second reproduced image Im2 does not satisfy the maximum diffraction angle limitation means that there is light that cannot be completely discarded even if the light is tried to be discarded into the second reproduced image region. In this case, light that cannot be completely discarded into the second reproduced image region can be emitted to the first reproduced image region side.

For this reason, for example, even if an attempt is made to reproduce an overall dark image such as an all-black image with the first reproduced image Im1, there may be a case where the image cannot be reproduced.

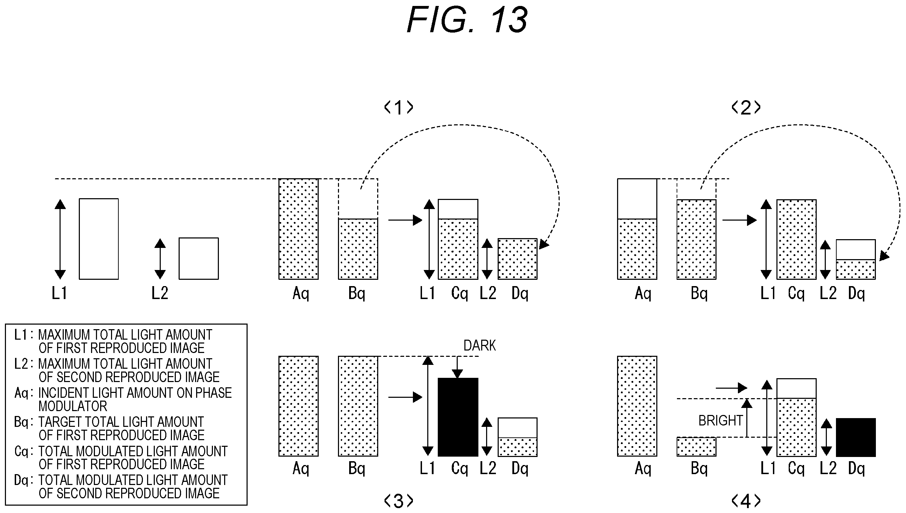

A specific case will be described with reference to Fig. 13.

First, in the description, the maximum total light amount L1 of the first reproduced image, the maximum total light amount L2 of the second reproduced image, the incident light amount Aq on the phase modulator, the target total light amount Bq of the first reproduced image, the total modulated light amount Cq of the first reproduced image, and the total modulated light amount Dq of the second reproduced image are used.

Among these words, the target total light amount Bq is synonymous with the target total light amount a described above.

The maximum total light amount L1 means the maximum total light amount of the first reproduced image Im1 in a case where the spatial light phase modulation is performed by the phase modulator 4 to generate the first reproduced image Im1. The maximum total light amount L1 can be obtained by subtracting the incident light amount to the first non-executable pixel from the incident light amount Aq when a pixel in which light cannot be completely bent to the first reproduced image region among pixels in the phase modulator 4 is defined as the first non-executable pixel.

The maximum total light amount L2 means the maximum total light amount of the second reproduced image Im2 in a case where the spatial light phase modulation is performed by the phase modulator 4 to generate the second reproduced image Im2. The maximum total light amount L2 can be obtained by subtracting the incident light amount to the second non-executable pixel from the incident light amount Aq when a pixel in which light cannot be completely bent to the second reproduced image region among pixels in the phase modulator 4 is defined as the second non-executable pixel.

In addition, the total modulated light amounts Cq and Dq mean the total light amounts of at least the first reproduced image Im1 and the second reproduced image Im2 generated by performing the spatial light phase modulation for solving the above-described problem I.

Here, since a case is assumed where a partial region of both the first reproduced image Im1 and the second reproduced image Im2 does not satisfy the maximum diffraction angle limitation of the phase modulator 4 as illustrated in Fig. 12, both the maximum total light amounts L1 and L2 have values smaller than the incident light amount Aq.

In Fig. 13, the case of <1> is a case where the target total light amount Bq of the first reproduced image is smaller than the maximum total light amount L1 of the first reproduced image, and the discarded light amount for reproducing the target total light amount Bq is equal to or less than the maximum total light amount L2 of the second reproduced image.

In this case, since it is possible to completely discard light corresponding to an unnecessary light amount out of the incident light amount Aq to the second reproduced image Im2 side, it is possible to reproduce the target total light amount Bq for the first reproduced image Im1.

The case of <2> is a case where the target total light amount Bq of the first reproduced image is equivalent to the maximum total light amount L1 of the first reproduced image, and the discarded light amount for reproducing the target total light amount Bq is equal to or less than the maximum total light amount L2 of the second reproduced image.

Also in this case, since it is possible to completely discard light corresponding to an unnecessary light amount out of the incident light amount Aq to the second reproduced image Im2 side, it is possible to reproduce the target total light amount Bq for the first reproduced image Im1.

The case of <3> is a case where the target total light amount Bq of the first reproduced image is larger than the maximum total light amount L1 of the first reproduced image. Since the total light amount exceeding the maximum total light amount L1 cannot be realized for the first reproduced image Im1, in this case, as illustrated in the drawing, the total modulated light amount Cq of the first reproduced image becomes smaller than the target total light amount Bq, and the brightness of the first reproduced image Im1 becomes darker than the target brightness.

The case of <4> is a case where the target total light amount Bq is too small to completely discard the light to the second reproduced image Im2 side. Specifically, (Aq - Bq) > L2, and excess light for making the target total light amount Bq cannot be completely discarded to the second reproduced image Im2 side.

In this case, the total modulated light amount Cq of the first reproduced image becomes larger than the target total light amount Bq, and the brightness of the first reproduced image Im1 becomes brighter than the target.

Therefore, in the second embodiment, as a measure for the case where the total modulated light amount Cq becomes smaller (darker) than the target total light amount Bq as in the case of <3>, a method is adopted in which it is determined whether or not the maximum total light amount L1 is less than the target total light amount Bq, and in a case where the maximum total light amount L1 is less than the target total light amount Bq, control is performed to increase the light emission amount of the light emitting unit **2.**

In addition, as a measure for the case where the total modulated light amount Cq becomes larger (brighter) than the target total light amount Bq as in the case of <4>, a method of determining whether or not "(Aq - Bq) > L2" and performing control to decrease the light emission amount of the light emitting unit 2 in the case of "(Aq - Bq) > L2" is adopted.

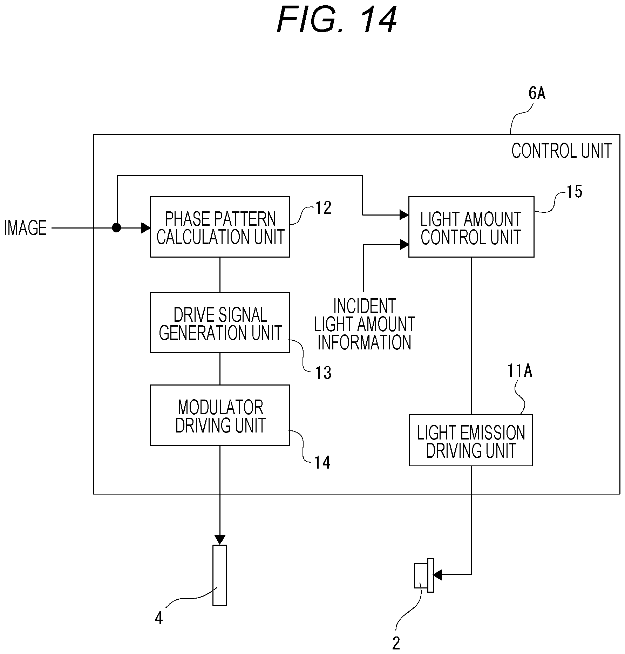

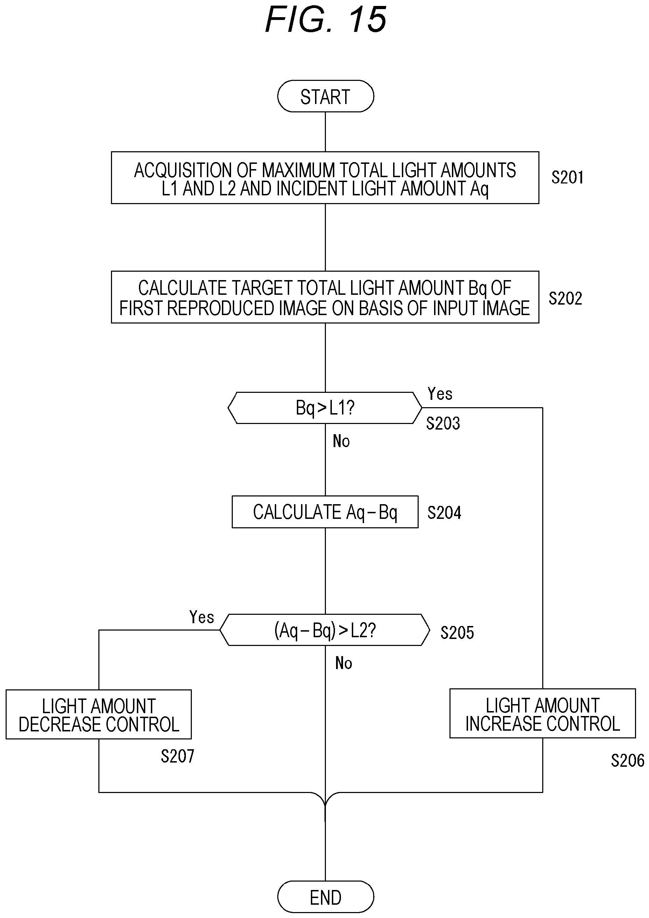

A configuration and a processing procedure for realizing the technique as the second embodiment as described above will be described with reference to Figs. 14 and 15.

Fig. 14 is a diagram for explaining an internal configuration example of a control unit 6A included in an image display device 1A as the second embodiment.

Note that the image display device 1A as the second embodiment is similar to the image display device 1 of the first embodiment except that the control unit 6A is provided instead of the control unit 6, and thus redundant description is avoided.

The control unit 6A is different from the control unit 6 illustrated in Fig. 5 in that a light amount control unit 15 is added and a light emission driving unit 11A is provided instead of the light emission driving unit 11.

The light emission driving unit 11A is different from the light emission driving unit 11 in having a function of adjusting the light emission amount of the light emitting unit 2.

The light amount control unit 15 executes the following processing for realizing the control method as the second embodiment described above on the basis of the input image and the incident light amount information. Here, the incident light amount information in the drawing is information indicating the incident light amount Aq.

Fig. 15 is a flowchart illustrating an example of processing executed by the light amount control unit 15.

First, in step S201, the light amount control unit 15 performs processing of acquiring the maximum total light amounts L1 and L2 and the incident light amount Aq. Here, the maximum total light amounts L1 and L2 may be obtained by calculation each time.

In step S202 subsequent to step S201, the light amount control unit 15 calculates the target total light amount Bq of the first reproduced image on the basis of the input image.

In step S203 subsequent to step S202, the light amount control unit 15 determines whether or not the target total light amount Bq > the maximum total light amount L1. When the target total light amount Bq > the maximum total light amount L1, the light amount control unit 15 proceeds to step S206, performs processing of controlling the light emission driving unit 11A so as to increase the light emission amount of the light emitting unit 2 as the light amount increase control, and terminates the series of processing illustrated in Fig. 15.

As a result, for the case of <3> described above, the total modulated light amount Cq can be made to match the target total light amount Bq.

Meanwhile, in a case where it is determined in step S203 that the target total light amount Bq > the maximum total light amount L1 is not satisfied, the light amount control unit 15 proceeds to step S204, calculates Aq - Bq, and then determines whether or not (Aq - Bq) > L2 is satisfied in step S205.

If (Aq - Bq) > L2, the light amount control unit 15 proceeds to step S207, performs processing of controlling the light emission driving unit 11A so as to reduce the light emission amount of the light emitting unit 2 as the light amount decrease control, and terminates the series of processing illustrated in Fig. 15.

As a result, for the case of <4> described above, the total modulated light amount Cq can be made to match the target total light amount Bq.

In a case where it is determined in step S205 that (Aq - Bq) > L2 is not satisfied, the light amount control unit 15 terminates the series of processing illustrated in Fig. 15.

In the above description, as a measure for the cases of <3> and <4>, an example has been described in which the total light amount of the first reproduced image Im1 is adjusted by adjusting the light emission amount of the light emitting unit 2, but instead, it is also conceivable to provide an amplitude modulator that performs spatial light amplitude modulation on the first reproduced image Im1 and adjust the total light amount of the first reproduced image Im1 by the amplitude modulator.

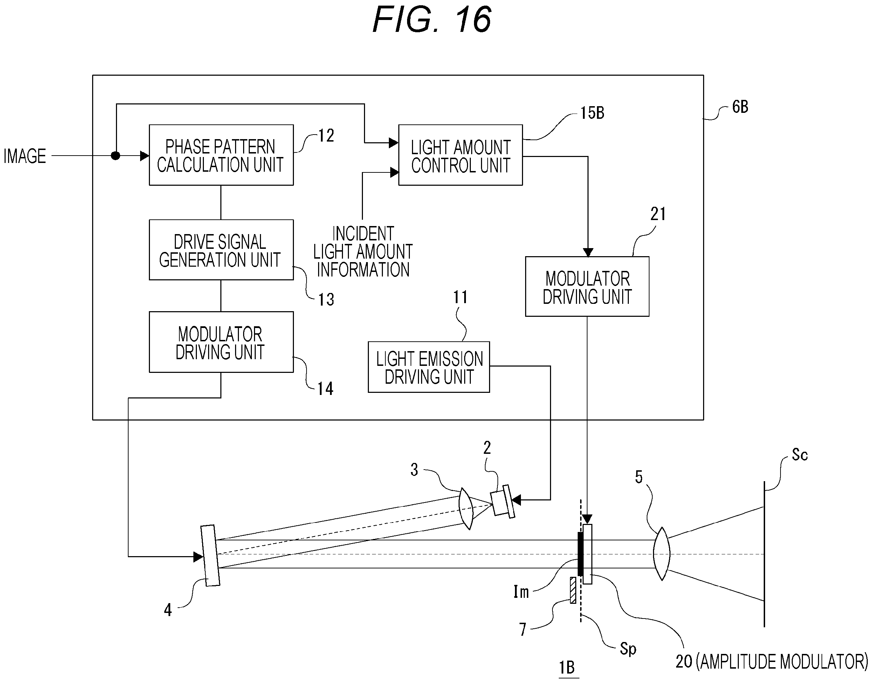

Fig. 16 is a diagram illustrating a configuration example of an image display device 1B as a modification of the second embodiment using such an amplitude modulator.

The difference from the image display device 1 of the first embodiment is that an amplitude modulator 20 is added and a control unit 6B is provided instead of the control unit 6.

The amplitude modulator 20 includes, for example, a transmissive liquid crystal panel, and is disposed at a position where spatial light amplitude modulation can be performed on the first reproduced image Im1. Note that, although the transmissive liquid crystal panel is used as the amplitude modulator 20 in this example, other devices such as a reflective liquid crystal panel and a digital micro mirror device (DMD) can be adopted as the amplitude modulator 20.

The control unit 6B is different from the control unit 6 in that a light amount control unit 15B and a modulator driving unit 21 are added.

The modulator driving unit 21 drives the amplitude modulator 20 on the basis of the control of the light amount control unit 15B. As a result, the total light amount of the first reproduced image Im1 can be adjusted by the amplitude modulator 20.

The light amount control unit 15B executes the processing illustrated in Fig. 15 similarly to the light amount control unit 15A, but the light amount control unit 15B controls the modulator driving unit 21 so that the amplitude modulator 20 increases the total light amount of the first reproduced image Im1 and controls the modulator driving unit 21 so that the amplitude modulator 20 decreases the total light amount of the first reproduced image Im1 as the light amount increase control in step S206 and the light amount decrease control in step S207, respectively. At this time, as the control to increase/decrease the total light amount of the first reproduced image Im1 by the amplitude modulator 20, for example, it is conceivable to perform control to increase/decrease the light transmittance of the effective pixel range in the amplitude modulator 20 as a whole.

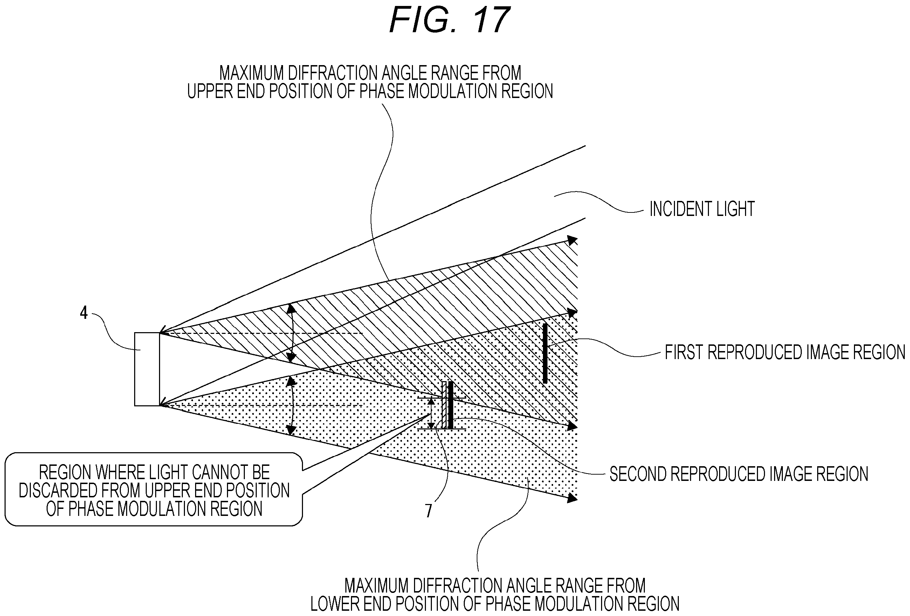

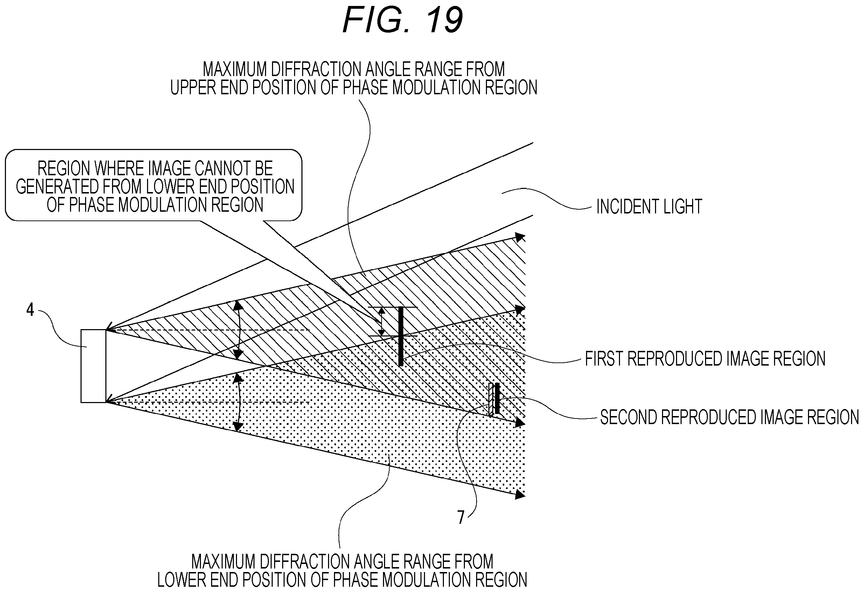

Here, in the above description, the description has been given on the assumption that the partial region does not satisfy the maximum diffraction angle limitation of the phase modulator 4 in both the first reproduced image Im1 and the second reproduced image Im2 as illustrated in Fig. 12. However, as the image display device of the embodiment, as illustrated in Fig. 17, a configuration may be adopted in which the entire region of the first reproduced image Im1 satisfies the maximum diffraction angle limitation of the phase modulator 4, but the partial region of the second reproduced image Im2 does not satisfy the maximum diffraction angle limitation of the phase modulator 4, or as illustrated in Fig. 19, the partial region of the first reproduced image Im1 does not satisfy the maximum diffraction angle limitation of the phase modulator 4, and the entire region of the second reproduced image Im2 satisfies the maximum diffraction angle limitation of the phase modulator 4.

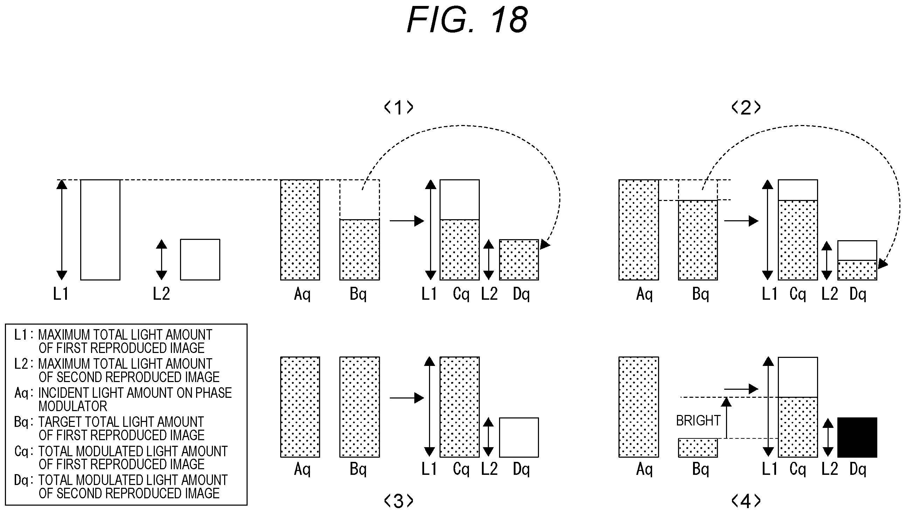

Here, in a case of adopting a configuration in which the entire region of the first reproduced image Im1 satisfies the maximum diffraction angle limitation of the phase modulator 4 but a partial region of the second reproduced image Im2 does not satisfy the maximum diffraction angle limitation of the phase modulator 4 as illustrated in Fig. 17, it is possible to set the maximum total light amount L1 = the incident light amount Aq. Therefore, as in the case of <3> described above, it is possible to prevent the problem that the total modulated light amount Cq < the target total light amount Bq due to the partial region of the first reproduced image Im1 not satisfying the maximum diffraction angle limitation of the phase modulator 4 from occurring (see Fig. 18).

Therefore, in this case, it is possible not to execute the processing of acquiring the maximum total light amount L1 in step S201 and the processing of steps S203 and S206 among the processing illustrated in Fig. 15.

In addition, in the case of Fig. 17, since the entire region of the first reproduced image Im1 satisfies the maximum diffraction angle limitation of the phase modulator 4, occurrence of aliasing for the first reproduced image Im1 is prevented. Therefore, in this case, the processing for preventing the occurrence of aliasing (the processing in steps S104 to S106 in Fig. 6) can be prevented from being executed.

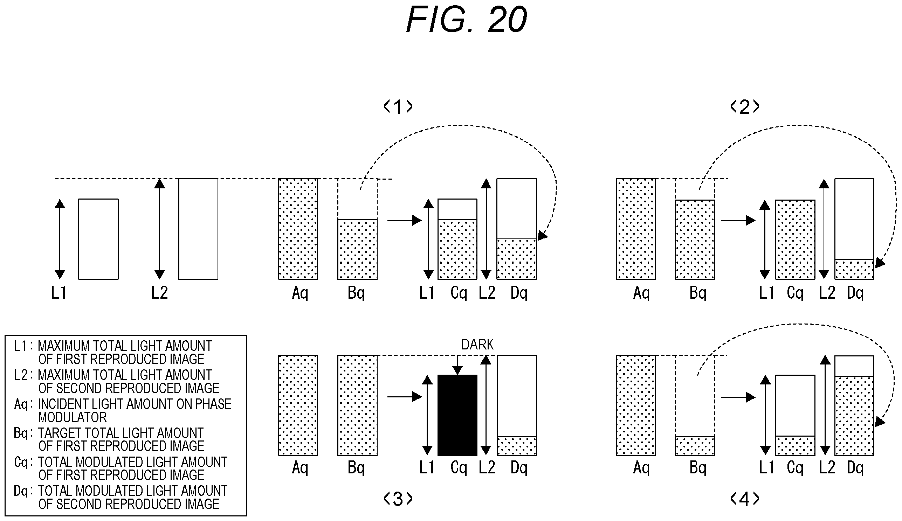

In addition, in a case of adopting a configuration in which a partial region of the first reproduced image Im1 does not satisfy the maximum diffraction angle limitation of the phase modulator 4 and the entire region of the second reproduced image Im2 satisfies the maximum diffraction angle limitation of the phase modulator 4 as illustrated in Fig. 19, it is possible to set the maximum total light amount L2 = the incident light amount Aq, and thus, it is possible to prevent occurrence of a case where it is difficult to discard light for (Aq - Bq) to the second reproduced image Im2 side as in the case of <4> described above (see Fig. 20).

Therefore, in this case, it is possible not to execute the processing of acquiring the maximum total light amount L2 in step S201 and the processing of steps S204, S205, and S207 among the processing illustrated in Fig. 15.

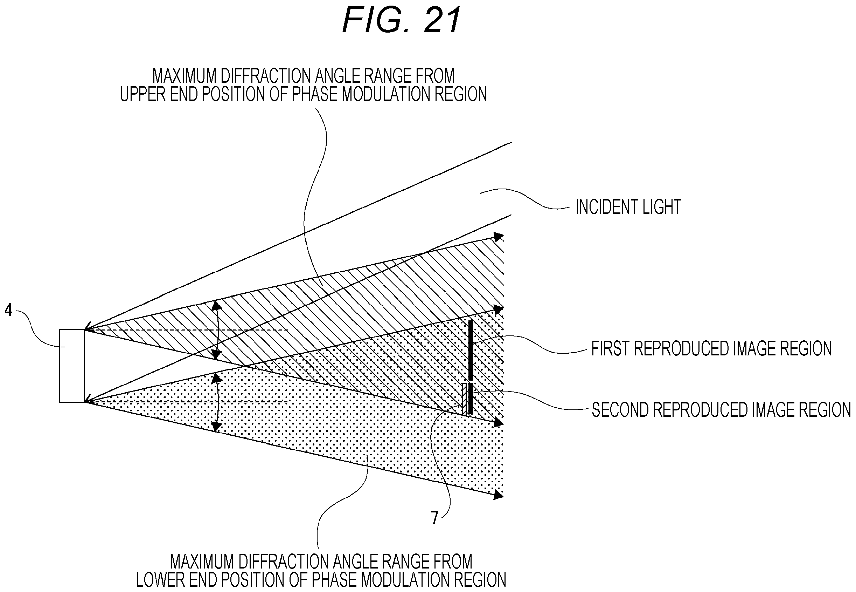

In addition, as illustrated in Fig. 21, the image display device as the embodiment can adopt a configuration in which the entire region satisfies the maximum diffraction angle limitation of the phase modulator 4 in both the first reproduced image Im1 and the second reproduced image Im2.

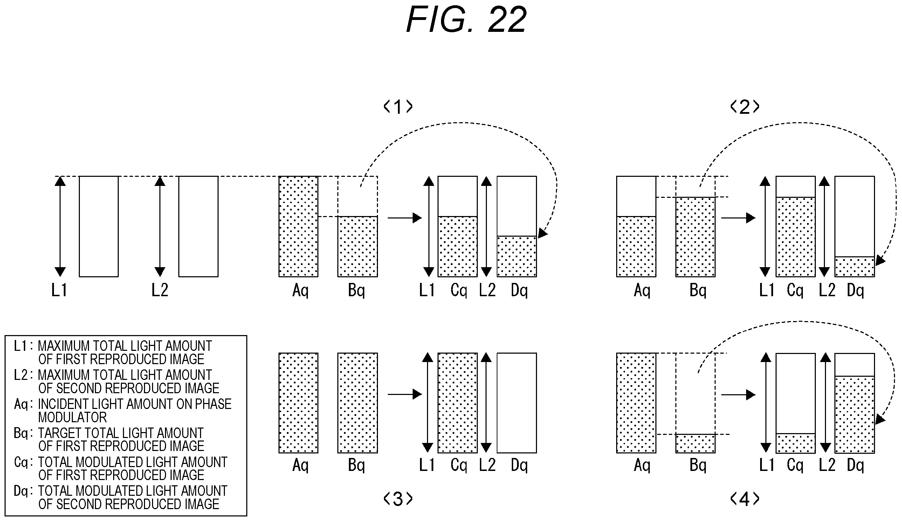

In this case, since the problem of <3> and the problem of <4> described above can be prevented from occurring (see Fig. 22), the series of processing illustrated in Fig. 15 can be prevented from being performed.

In this case, it is also possible not to execute processing for preventing the occurrence of aliasing.

Here, as a measure for the problems of <3> and <4> described above, an example has been described in which the light emission amount of the light emitting unit 2 is adjusted and the total light amount of the first reproduced image Im1 is adjusted by the amplitude modulator 20. However, for example, in a case where the input image is a moving image, a plurality of frames before display is input to determine the presence or absence of a frame that does not satisfy the target total light amount Bq, and in a case where there is a frame that does not satisfy the target total light amount Bq, the total light amount of the first reproduced image Im1 is adjusted by spatial light phase modulation for at least a plurality of frames on the past side, so that it is possible to make inconsistency in brightness of a frame that does not satisfy the target total light amount Bq less noticeable.

Specifically, in that case, as a measure for the problem of <3> described above, the control unit that controls the phase modulator 4 such as the control unit 6 inputs a plurality of frames of images (that is, performs prefetching), and in a case where there is a frame in which the maximum total light amount L1 of the first reproduced image by the phase modulator 4 is less than the target total light amount Bq, performs processing of correcting the amount of light with which the second reproduced image region is irradiated by the discarded light control in the increasing direction for frames past the frame.

Here, the discarded light control means control for causing the phase modulator 4 to execute spatial light phase modulation for irradiating the second reproduced image region with light corresponding to a light amount determined on the basis of the target total light amount Bq. Specifically, the present example is control for causing the phase modulator 4 to execute spatial light phase modulation for irradiating the second reproduced image region with light corresponding to Aq - Bq.

In addition, as a measure for the problem of <4> described above, the control unit that controls the phase modulator 4 such as the control unit 6 inputs a plurality of frames of an image, and in a case where there is a frame satisfying "(Aq - Bq) > L2", performs processing of correcting the amount of light with which the second reproduced image region is irradiated by the discarded light control in the decreasing direction for frames past the frame.

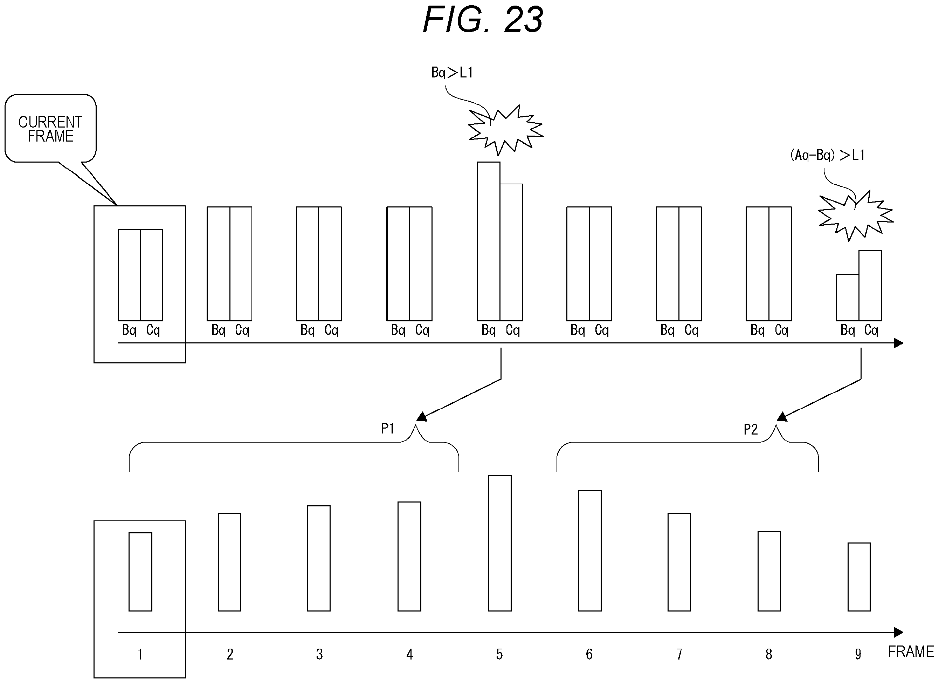

An image of specific processing is illustrated in Fig. 23.

In Fig. 23, in the upper part, the relationship between the target total light amount Bq and the total modulated light amount Cq is illustrated for nine frames from the frame 1 that is the current frame (frame to be currently processed) to the frame 9 that is the future side for eight frames.

The example of this drawing illustrates a case where it is determined that Bq > L1 in the prefetched frame 5, and it is determined that (Aq - Bq) > L2 in the frame 9.

In response to the determination that Bq > L1 is satisfied for the frame 5, processing of correcting the amount of light with which the second reproduced image region is irradiated by the discarded light control in the increasing direction is performed for a plurality of frames in the period P1 before the frame 5. Specifically, the amount of light with which the second reproduced image region is irradiated is corrected to be larger than (Aq - Bq).

As a result, in a case where the partial region of the first reproduced image Im1 does not satisfy the maximum diffraction angle limitation and the maximum total light amount L1 of the first reproduced image is less than the incident light amount Aq, in a case where there is a frame (referred to as a dark frame) in which the total modulated light amount of the first reproduced image becomes darker than the target total light amount in the prefetched frame, the past frames are controlled to be darker than the frame, and the darkness of the dark frame becomes less noticeable.

Furthermore, in response to the determination that (Aq - Bq) > L2 is satisfied for the frame 9, processing of correcting the amount of light with which the second reproduced image region is irradiated by the discarded light control in the decreasing direction is performed for a plurality of frames in the period P2 past the frame 9. Specifically, the amount of light with which the second reproduced image region is irradiated is corrected to be smaller than (Aq - Bq).

As a result, in a case where there is a frame (referred to as a bright frame) in which the total modulated light amount Cq of the first reproduced image is brighter than the target total light amount Bq in the prefetched frame due to a partial region of the second reproduced image Im2 not satisfying the maximum diffraction angle limitation, the past frames are controlled to be brighter than the frame, and the brightness of the bright frame becomes less noticeable.

Note that, in the above description, the case has been exemplified where the correction of the light amount to be discarded to the second reproduced image region is performed only for the frames on the past side with respect to the dark frame and the bright frame, but the correction of the light amount to be discarded to the second reproduced image region can be performed not only for the frames on the past side but also for the frames on the future side.

Furthermore, at this time, by smoothly changing the correction amount of the light amount to be discarded to the second reproduced image region in the time direction, it is possible to make it difficult for the user to notice the change in the total light amount of the first reproduced image Im1.

Here, in the above description, it has been mentioned that the maximum diffraction angle limitation by the diffraction limit θ is satisfied as the diffraction angle limitation for the first reproduced image Im1 and the second reproduced image Im2, but the diffraction angle limitation for the reproduced image Im may be configured to satisfy the limitation of the upper limit diffraction angle by the angle θS smaller than the maximum diffraction angle (diffraction limit θ) of the phase modulator 4.

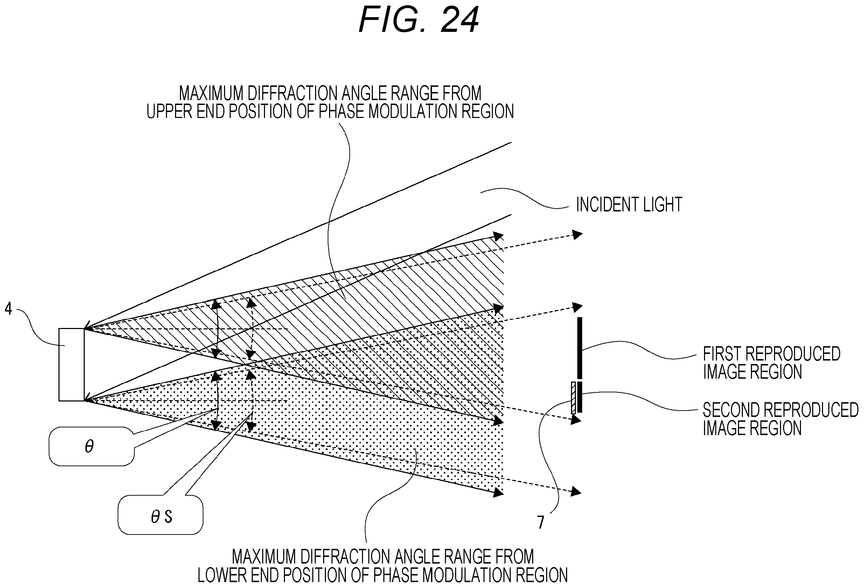

Fig. 24 illustrates a state in a case where the entire region satisfies the limitation of the upper limit diffraction angle by the angle θS in both the first reproduced image Im1 and the second reproduced image Im2.

Here, the diffraction efficiency in the diffraction grating tends to decrease as the diffraction angle increases.

Therefore, by configuring to satisfy the limitation of the upper limit diffraction angle by the angle θS smaller than the diffraction limit θ of the phase modulator 4 as described above, it is possible to improve the diffraction efficiency of light for generating the first reproduced image Im1 or the second reproduced image Im2. In particular, it is possible to improve the reproducibility of the display image with respect to the target image by improving the diffraction efficiency of the light for generating the first reproduced image Im1.

### <3. Third Embodiment>

In the third embodiment, zero-order light of the phase modulator 4 is dealt with.

Here, in the phase modulator 4, zero-order light that cannot be subjected to spatial light phase modulation and regularly reflects incident light, such as reflection from a protective glass surface of the phase modulator 4 or reflection from a black matrix between pixels, is generated. When this zero-order light is superimposed on the first reproduced image Im1, this causes image quality degradation such as contrast degradation.

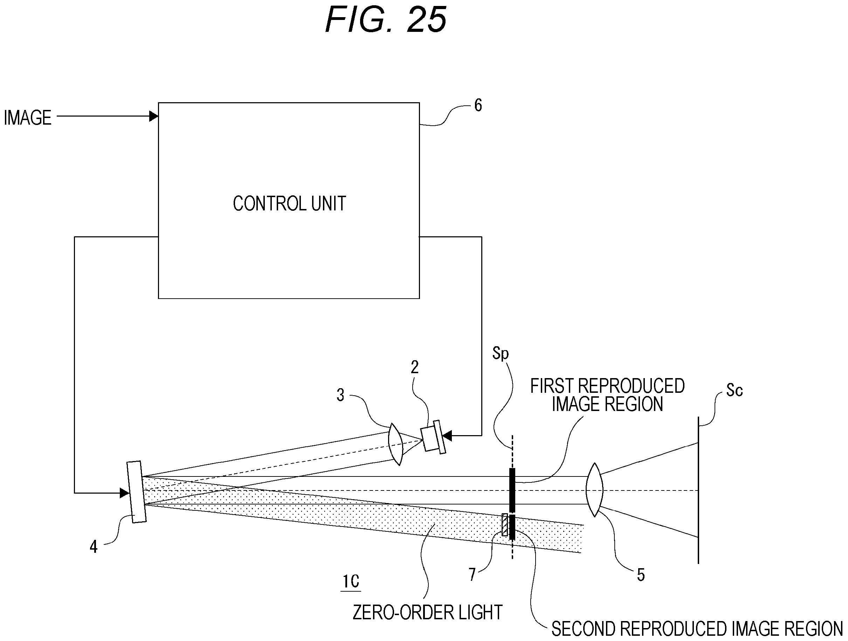

Therefore, in the third embodiment, as in an image display device 1C illustrated in Fig. 25, the light flux of the first reproduced image Im1 is emitted in a direction different from the light flux of the zero-order light of the phase modulator 4.

In this case, the phase pattern calculation unit 12 in the control unit 6 calculates the phase modulation pattern so that the light flux of the first reproduced image Im1 is emitted in a direction different from the light flux of the zero-order light.

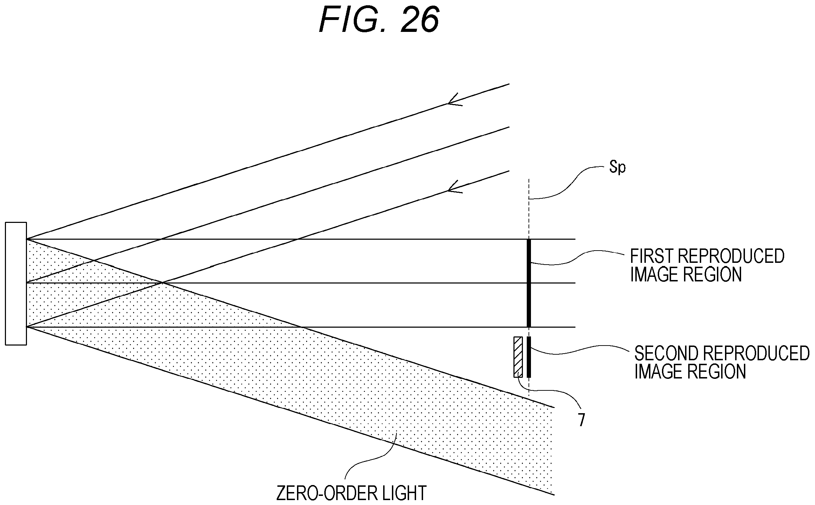

In the example of Fig. 25, the second reproduced image region is irradiated with the zero-order light, but as illustrated in Fig. 26, a position different from the second reproduced image region in the image plane direction may be irradiated with the zero-order light.

As described above, the light flux of the first reproduced image Im1 is emitted in a direction different from the light flux of the zero-order light of the phase modulator 4, whereby the zero-order light of the phase modulator 4 is prevented from being superimposed on the first reproduced image Im1.

Therefore, the contrast of the first reproduced image Im1 can be improved. Further, it is possible to improve the reproducibility of the brightness of the input image.

### <4. Fourth Embodiment>

The fourth embodiment is an example corresponding to color image display.

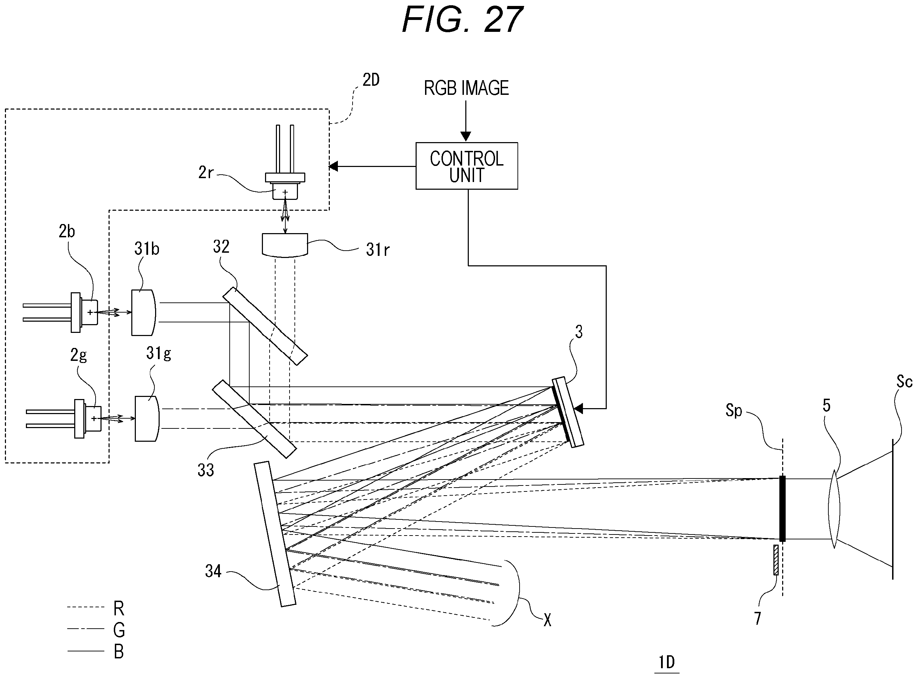

Fig. 27 is a diagram illustrating a configuration example of an image display device 1D as the fourth embodiment.

As illustrated, in the image display device 1D, a light emitting unit 2D that emits a plurality of light having different wavelength bands is provided instead of the light emitting unit 2. In the present example, the color image display is realized by generating a first reproduced image Im1 of each of red (R) light, green (G) light, and blue (B) light by the phase modulator 4 and projecting a composite image thereof by the projection lens 5. Therefore, the light emitting unit 2D is provided with, as light emitting elements, a light emitting element 2r that emits R light, a light emitting element 2g that emits G light, and a light emitting element 2b that emits B light.

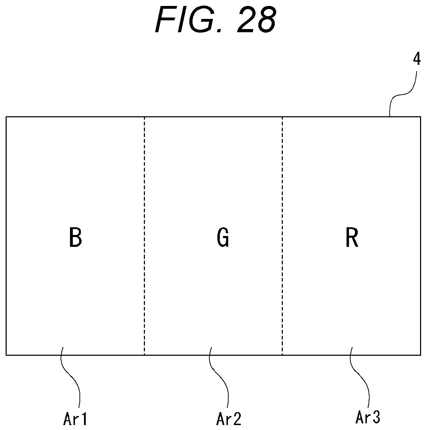

Furthermore, in the present example, since the first reproduced image Im1 of each of the R light, the G light, and the B light is generated by the single phase modulator 4, the phase modulator 4 performs region division as illustrated in Fig. 28. Specifically, the phase modulation region (effective pixel region) in the phase modulator 4 is divided into three regions of a region Ar1 in charge of generating the reproduced image Im for the B light, a region Ar2 in charge of generating the reproduced image Im for the G light, and a region Ar3 in charge of generating the reproduced image Im for the R light.

In Fig. 27, the optical system in this case is configured to cause each of the R light emitted from the light emitting element 2r, the G light emitted from the light emitting element 2g, and the B light emitted from the light emitting element 2b to be incident on the corresponding region Ar of the phase modulator 4.

As illustrated in the drawing, the R light emitted from the light emitting element 2r is incident on the front surface of the first dichroic mirror 32 through the collimation lens 31r, and the G light emitted from the light emitting element 2g is incident on the back surface of the first dichroic mirror 32 through the collimation lens 31g.

The first dichroic mirror 32 has a characteristic of transmitting R light and reflecting G light. That is, the R light incident from the light emitting element 2r through the collimation lens 31r passes through the first dichroic mirror 32, and the G light incident from the light emitting element 2g through the collimation lens 31g is reflected by the back surface of the first dichroic mirror 32. As illustrated in the drawing, the R light transmitted through the first dichroic mirror 32 and the G light reflected by the back surface of the first dichroic mirror 32 are incident on the front surface side of the second dichroic mirror 33.

The B light emitted from the light emitting element 2b is incident on the back surface of the second dichroic mirror 33 via the collimation lens 31b. The second dichroic mirror 33 has a characteristic of reflecting the R light and the G light and transmitting the B light. Therefore, the R light and the G light incident from the first dichroic mirror 32 are reflected by the surface of the second dichroic mirror 33, and the B light incident from the light emitting element 2b via the collimation lens 31b is transmitted through the second dichroic mirror 33.

In image display device 1D, the R light, the G light, and the B light are emitted from the surface of second dichroic mirror 33 such that the respective light fluxes are parallel to each other. Further, in the image display device 1D, the R light, the G light, and the B light emitted from the surface of the second dichroic mirror 33 as described above are incident on the corresponding regions Ar of the phase modulator 4 according to the correspondence relationship illustrated in Fig. 28.

Here, in forming the first reproduced image Im1 as a color image on the reproduction surface Sp using the R light, the G light, and the B light, spatial light phase modulation based on an input image of a corresponding color is performed in the regions Ar1, Ar2, and Ar3. At this time, the spatial light phase modulation in each region Ar is performed such that the first reproduced image Im1 of each color is generated in the same first reproduced image region on the reproduction surface Sp. As a result, the first reproduced image Im1 as a color image is obtained on the reproduction surface Sp.

In the image display device 1D, the R light, the G light, and the B light subjected to the spatial light phase modulation in the respective corresponding regions Ar of the phase modulator 4 are reflected by the mirror 34 and guided to the reproduction surface Sp. At this time, as described above, on the reproduction surface Sp, the images of the respective colors generated by the spatial light phase modulation for each region Ar in the phase modulator 4 are superimposed on the same first reproduced image region, thereby forming the first reproduced image Im1 as a color image.

The first reproduced image Im1 as a color image formed on the reproduction surface Sp in this manner is projected onto a predetermined projection surface such as the surface of the screen Sc by the projection lens 5, and display of the color image is realized.

In the image display device 1D, a control unit 6D is provided instead of the control unit 6.

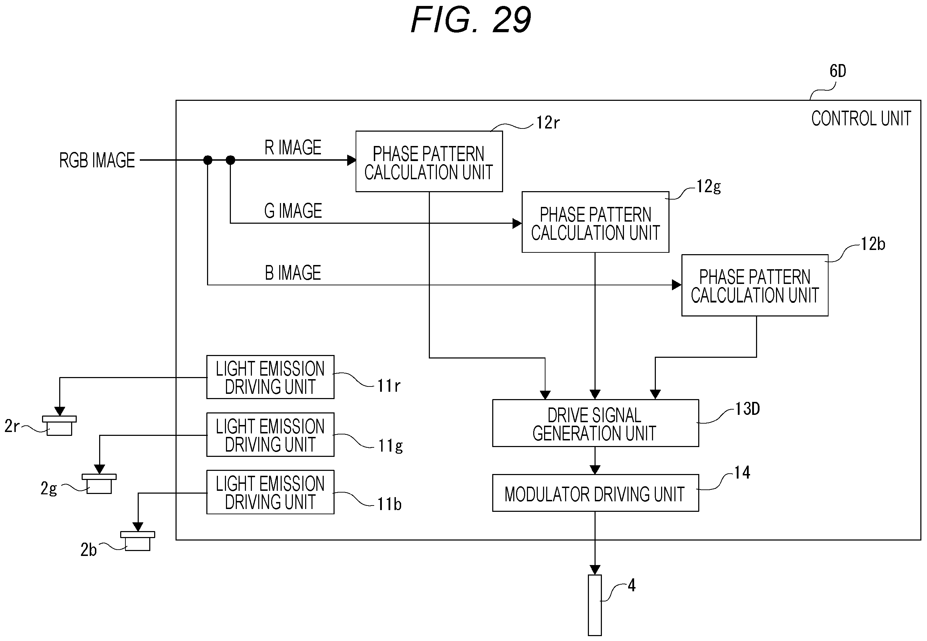

Fig. 29 is a diagram for explaining an internal configuration example of the control unit 6D, and illustrates the light emitting elements 2r, 2g, and 2b and the phase modulator 4 illustrated in Fig. 27 together with the internal configuration example of the control unit 6D.

As illustrated, the control unit 6D is provided with light emission driving units 11r, 11g, and 11b, phase pattern calculation units 12r, 12g, and 12b, a drive signal generation unit 13D, and a modulator driving unit 14.

The light emission driving units 11r, 11g, and 11b drive the light emitting elements of the corresponding colors among the light emitting elements 2r, 2g, and 2b to emit light.

The phase pattern calculation unit 12r inputs the R image among the RGB images input to the control unit 6D, and calculates the phase modulation pattern for the region Ar3 used for generating the reproduced image Im for the R light on the basis of the R image. In addition, the phase pattern calculation unit 12g inputs the G image among the RGB images input to the control unit 6D, and calculates the phase modulation pattern for the region Ar2 used to generate the reproduced image Im for the G light on the basis of the G image. The phase pattern calculation unit 12b inputs the B image among the RGB images input to the control unit 6D, and calculates the phase modulation pattern for the region Ar1 used to generate the reproduced image Im for the B light on the basis of the B image.

Here, the phase pattern calculation units 12r, 12g, and 12b calculate the target total light amount Bq of the first reproduced image Im1 on the basis of the input image for each color (for each wavelength band), and perform control to cause the phase modulator 4 to execute spatial light phase modulation for irradiating the second reproduced image region with light corresponding to a light amount determined on the basis of the target total light amount Bq for each color.

Specifically, the phase pattern calculation unit 12r calculates the target total light amount (a) of the R light for the first reproduced image Im1 on the basis of the input R image, calculates the discarded light amount (c) of the R light by "b - a" using the actual total light amount (b) of the R light, and calculates the phase modulation pattern (referred to as "Pr1") of the region Ar3 for irradiating the second reproduced image region with light corresponding to the discarded light amount c for the R light. In addition, the phase pattern calculation unit 12r calculates a target light amount distribution of the first reproduced image Im1 of the R light on the basis of the input R image, calculates a phase modulation pattern (referred to as "Pr2") of the region Ar3 for reproducing the target light amount distribution in the first reproduced image region, and outputs a phase modulation pattern obtained by combining the phase modulation patterns Pr1 and Pr2 to the drive signal generation unit 13D as a phase modulation pattern of the region Ar3.

Furthermore, the phase pattern calculation unit 12g calculates the target total light amount (a) of the G light for the first reproduced image Im1 on the basis of the input G image, calculates the discarded light amount (c) of the G light by "b - a" using the actual total light amount (b) of the G light, and calculates the phase modulation pattern (referred to as "Pg1") of the region Ar2 for irradiating the second reproduced image region with light corresponding to the discarded light amount c for the G light. In addition, the phase pattern calculation unit 12g calculates a target light amount distribution of the first reproduced image Im1 of the G light on the basis of the input G image, calculates a phase modulation pattern (referred to as "Pg2") of the region Ar2 for reproducing the target light amount distribution in the first reproduced image region, and outputs a phase modulation pattern obtained by combining the phase modulation patterns Pg1 and Pg2 to the drive signal generation unit 13D as a phase modulation pattern of the region Ar2.

The phase pattern calculation unit 12b calculates the target total light amount (a) of the B light for the first reproduced image Im1 on the basis of the input B image, calculates the discarded light amount (c) of the B light by "b - a" using the actual total light amount (b) of the B light, and calculates the phase modulation pattern (referred to as "Pb1") of the region Ar1 for irradiating the second reproduced image region with light corresponding to the discarded light amount c for the B light. In addition, the phase pattern calculation unit 12b calculates a target light amount distribution of the first reproduced image Im1 of the B light on the basis of the input B image, calculates a phase modulation pattern (referred to as "Pb2") of the region Ar1 for reproducing the target light amount distribution in the first reproduced image region, and outputs a phase modulation pattern obtained by combining the phase modulation patterns Pb1 and Pb2 to the drive signal generation unit 13D as a phase modulation pattern of the region Ar1.

The drive signal generation unit 13D generates a drive signal of the entire effective pixel region of the phase modulator 4 on the basis of the phase modulation pattern of the regions Ar1, Ar2, and Ar3 input from the phase pattern calculation units 12r, 12g, and 12b, and outputs the drive signal to the modulator driving unit 14. The modulator driving unit 14 drives each pixel of the phase modulator 4 on the basis of the drive signal input from the drive signal generation unit 13D.

With the above configuration, for example, in a case where a color image is displayed using a plurality of types of light having different wavelength bands such as R, G, and B, it is possible to change the light amount to be discarded to the second reproduced image side according to the magnitude of the target total light amount for each wavelength band.

Therefore, the total light amount of the target image can be appropriately reproduced for the display image by the color image, and the reproducibility of the display image with respect to the target image can be improved.

In addition, it is possible to improve the reproducibility of the white balance for the display image.

Note that, although Fig. 27 illustrates a configuration including only one light shielding unit 7, in the image display device 1D, a plurality of light shielding units 7 may be provided, for example, individually for each wavelength band.

In the fourth embodiment, it is also conceivable that the phase pattern calculation units 12r, 12g, and 12b calculate the phase modulation pattern for solving the problem II described above for the light of the corresponding wavelength band.

Here, for a plurality of types of light having different wavelength bands such as R, G, and B, the second reproduced image regions can be set at arbitrary positions.

However, in the phase modulator 4, the shorter the wavelength, the more difficult it is to bend the light. Therefore, it is desirable to set the second reproduced image region of the light of each wavelength band such that the position in the image plane direction is closer to the irradiation region of the zero-order light of the phase modulator 4 as the second reproduced image region of the light of the shorter wavelength is located.

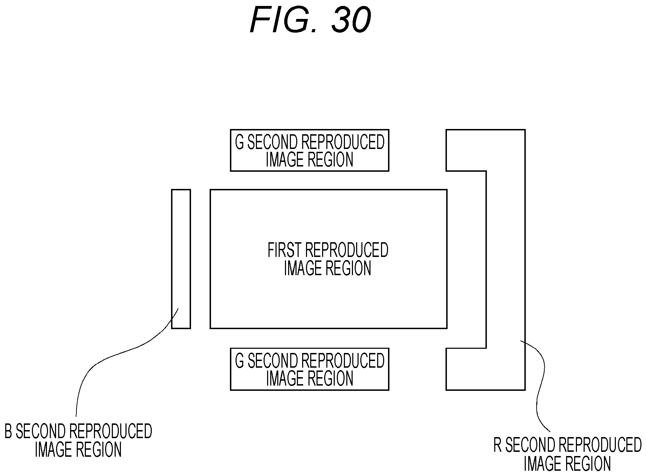

Fig. 30 illustrates a setting example of the second reproduced image region for each of the R, G, and B wavelength bands.

Here, since the setting of the region Ar illustrated in Fig. 28 is assumed in the present example, in the first reproduced image region in the drawing, the irradiation region of the zero-order light of the R light is the rightmost side, the irradiation region of the zero-order light of the G light is the center, and the irradiation region of the zero-order light of the B light is the leftmost side.

In the example of Fig. 30, the distance from the zero-order light irradiation region to the second reproduced image region in the image plane direction is the shortest for the B light having the shortest wavelength.

Further, in the example of Fig. 30, for the G light, the second reproduced image region is set at two positions above and below the first reproduced image region, and the second reproduced image region of the R light is set in a C-shape.

As described above, the position in the image plane direction is set to be closer to the irradiation region of the zero-order light of the phase modulator 4 as the second reproduced image region of the short-wavelength light is located, so that the light can be completely discarded to the second reproduced image region without largely separating the second reproduced image region from the phase modulator 4 in the optical axis direction for the short-wavelength light.

Therefore, it is possible to downsize the device by reducing the size of the optical system.

Note that, in the fourth embodiment described above, three types of light of R light, G light, and B light have been exemplified as examples of the "plurality of types of light having different wavelength bands" incident on the phase modulator 4 for image reproduction. However, the "plurality of types of light having different wavelength bands" is not limited to the R light, the G light, and the B light, and may be light of intermediate colors such as cyan and magenta.

Furthermore, the number of "plurality of types of light having different wavelength bands" is not limited to three, and is only required to be at least two or more. In other words, the number of divisions of the region Ar in the phase modulator 4 is not limited to three, and is only required to be two or more.

In addition, in the above description, the division of the region Ar in the phase modulator 4 is assumed to be equal division, but may be unequal division.

Furthermore, in order to realize color image display, it is also possible to adopt a configuration in which the phase modulator 4 is individually provided for each of a plurality of types of light having different wavelength bands.

In this case, it is conceivable that each phase modulator 4 adopts a configuration in which a reproduced image is generated for incident light of a corresponding wavelength band, and the reproduced images are combined and projected by the projection lens 5.

### <5. Modification>

Although various embodiments according to the present technology have been described above, the present technology is not limited to the specific examples described above, and configurations as various modifications can be adopted.

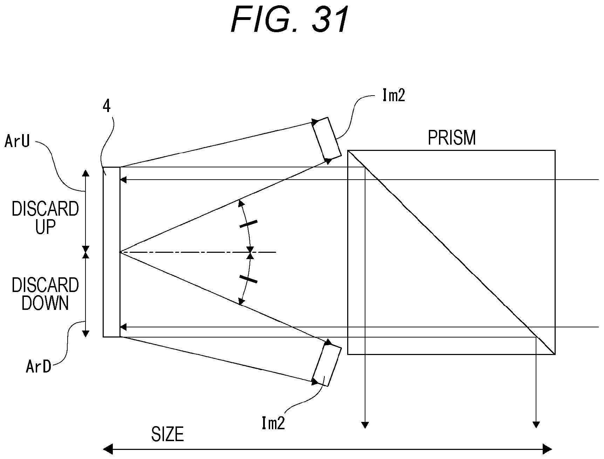

For example, as illustrated in Fig. 31, it is conceivable to set a plurality of second reproduced image regions at different positions in the image plane direction. In this case, the control unit that controls the phase modulator 4 causes the phase modulator 4 to execute spatial light phase modulation for generating the second reproduced image Im2 in each of the second reproduced image regions.

Specifically, in the example of Fig. 31, the second reproduced image region is set at two positions on the upper side and the lower side of the first reproduced image region, and the phase modulation region of the phase modulator 4 is divided into an upper region ArU and a lower region ArD. Then, the upper region ArU is in charge of irradiation of the discarded light to the upper second reproduced image region, and the lower region ArD is in charge of irradiation of the discarded light to the lower second reproduced image region.

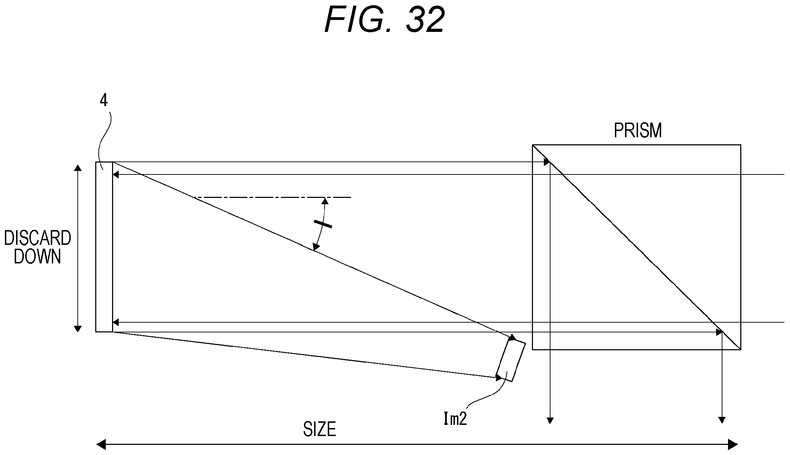

Here, as illustrated in Fig. 32, in a case where only one second reproduced image region is set, it is necessary to secure a certain distance in the optical axis direction from the phase modulator 4 to the second reproduced image region in order to completely discard light to the second reproduced image region from the balance of the diffraction limit θ of the phase modulator 4.

Meanwhile, as illustrated in Fig. 31, the distance from the phase modulator 4 to the second reproduced image region in the optical axis direction can be shortened as compared with the case of discarding light into one second reproduced image region as illustrated in Fig. 32.

Therefore, it is possible to downsize the device by reducing the size of the optical system.

In addition, by discarding the light in each of the plurality of second reproduced image regions, the light can be discarded while avoiding the region where the temperature rise is desired to be suppressed. Furthermore, it is possible to prevent stray light from being generated when the light of the second reproduced image hits a region where black coating is not applied.

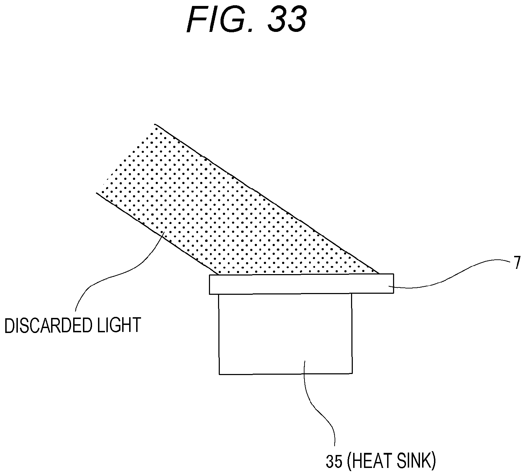

In addition, as for the light shielding unit 7, in a case where a temperature rise due to light absorption becomes a problem, as illustrated in Fig. 33, a heat sink 35 may be provided on the back side of the light shielding unit 7 (that is, the side opposite to the light incident surface). Note that, the heat sink 35 may be integrated with the light shielding unit 7.

Furthermore, it is desirable that the light shielding unit 7 is constituted by a material having a low coefficient of thermal expansion, or is disposed at a position away from a member holding the optical component and requiring positional accuracy and the like, so that the influence on the member is reduced.

In addition, for the second reproduced image Im2, the in-plane light amount distribution may be determined according to the thermal resistance distribution of the light shielding unit 7. For example, it is conceivable that the light amount distribution is such that the light amount is larger in a portion having a lower thermal resistance than in a portion having a higher thermal resistance.

As a result, deformation of the optical system due to equalization of the thermal expansion amount can be suppressed. In addition, it is possible to achieve energy saving of a cooling device such as a fan by improving waste thermal efficiency, downsizing of a housing, and suppression of deterioration of members.

In addition, in the above description, the reflective liquid crystal panel is used as the phase modulator 4, but a device other than the reflective liquid crystal panel can also be adopted as the phase modulator 4.

For example, a transmissive liquid crystal panel can be employed. In addition, the present invention is not limited to the liquid crystal panel, and a device other than the liquid crystal panel, such as a device (for example, a device configured such that a height of a mirror surface is adjustable for each pixel) by micro electro mechanical systems (MEMS), can be used.

### <6. Summary of Embodiments>

As described above, an image display device (1, 1A, 1B, 1C, and 1D) as an embodiment includes: a light emitting unit (2 and 2D) that emits light; a phase modulator (4) that performs spatial light phase modulation on incident light from the light emitting unit; a control unit (6, 6A, 6B, and 6D) that causes the phase modulator to execute spatial light phase modulation for generating a first reproduced image in a first reproduced image region and a second reproduced image in a second reproduced image region having a position in an image plane direction different from that of the first reproduced image region, as reproduced images generated by the spatial light phase modulation on the incident light; a projection lens (5) that projects the first reproduced image; and a light shielding unit (7) that shields the second reproduced image such that the second reproduced image is not projected by the projection lens.

Accordingly, in a case where the first reproduced image is displayed as a projection image, unnecessary light can be discarded to the second reproduced image side. For example, in a case where the actual total light amount of the first reproduced image exceeds the target total light amount, it is possible to appropriately reproduce the total light amount of the image by discarding light exceeding the target total light amount to the second reproduced image side, or to prevent the occurrence of aliasing in the first reproduced image by discarding light requiring a bending amount exceeding the diffraction limit to the second reproduced image side.

Therefore, in the image display device that projects the reproduced image generated by the spatial light phase modulation to display the image, it is possible to improve the reproducibility of the display image with respect to the target image.

Furthermore, in the image display device as an embodiment, the control unit calculates a target total light amount of the first reproduced image on the basis of the input image, and causes the phase modulator to execute spatial light phase modulation for irradiating the second reproduced image region with light corresponding to a light amount determined on the basis of the target total light amount.

This makes it possible to change the light amount to be discarded to the second reproduced image side according to the magnitude of the target total light amount.

Therefore, regarding the display image, the total light amount of the target image can be appropriately reproduced, and in that respect, the reproducibility of the display image with respect to the target image can be improved.

In addition, since the adjustment of the total light amount can be realized by the phase modulator alone, it is not necessary to control the light emission amount of the light source of the incident light in order to adjust the total light amount or to separately provide an amplitude modulator that performs spatial light amplitude modulation on the first reproduced image to control the total light amount of the first reproduced image.

As a result, it is not necessary to provide a configuration for controlling the light emission amount of the light source and an amplitude modulator, the number of device components can be reduced, and the cost and size of the device can be reduced.

Furthermore, in the image display device as an embodiment, the control unit acquires the total light amount of the light amount distribution formed in the first reproduced image region as the actual total light amount in a case where the spatial light phase modulation by the phase modulator is not performed on the incident light, and causes the phase modulator to execute the spatial light phase modulation for irradiating the second reproduced image region with light corresponding to the difference light amount calculated as the difference between the target total light amount and the actual total light amount.

As a result, in a case where the actual total light amount of the first reproduced image exceeds the target total light amount, it is possible to discard light exceeding the target total light amount to the second reproduced image side.

Therefore, regarding the display image, the total light amount of the target image can be appropriately reproduced, and in that respect, the reproducibility of the display image with respect to the target image can be improved.

Furthermore, in the image display device as an embodiment, the entire region of the first reproduced image satisfies the maximum diffraction angle limitation of the phase modulator (see Figs. 17, 21, and 24).

The fact that the entire region of the first reproduced image satisfies the maximum diffraction angle condition means that, in a case where the spatial light phase modulation is performed so as to reproduce the light amount distribution of the target image, all the light can be completely bent in the first reproduced image region, so that occurrence of aliasing in the first reproduced image can be prevented. Therefore, it is not necessary to execute processing for discarding light to the second reproduced image side in order to prevent aliasing.

In addition, in the image display device as an embodiment, the entire region of the second reproduced image satisfies the maximum diffraction angle limitation of the phase modulator (see Figs. 19, 21, and 24).

The fact that the entire region of the second reproduced image satisfies the maximum diffraction angle condition means that there is no limitation on the amount of light to be discarded to the second reproduced image side.

Therefore, an all-black image can be reproduced by the first reproduced image (in a case of taking a measure against superimposition of zero-order light).

Furthermore, in the image display device as an embodiment, the entire regions of the first reproduced image and the second reproduced image satisfy the maximum diffraction angle limitation of the phase modulator (see Figs. 21 and 24).

As a result, the occurrence of aliasing in the first reproduced image can be prevented, and an all-black image can be reproduced by the first reproduced image.

Furthermore, in the image display device as an embodiment, the entire region of the first reproduced image satisfies the limitation of the upper limit diffraction angle by an angle smaller than the maximum diffraction angle of the phase modulator (see Fig. 24).

As a result, the diffraction efficiency of the light for generating the first reproduced image can be improved, and the reproducibility of the display image with respect to the target image can be improved.

Further, in the image display device as an embodiment, the control unit calculates a target light amount distribution of the first reproduced image on the basis of the input image, specifies a region on the phase modulator where light cannot be completely bent into the first reproduced image region in a case where the target light amount distribution is reproduced in the first reproduced image region as a non-modulatable region, and causes the phase modulator to execute spatial light phase modulation for irradiating the second reproduced image region with incident light to the non-modulatable region.

This prevents the occurrence of aliasing in the first reproduced image.

Therefore, it is possible to improve the reproducibility of the display image with respect to the target image.

Further, in the image display device (1C) as an embodiment, the light flux of the first reproduced image is emitted in a direction different from the light flux of the zero-order light of the phase modulator (see Figs. 25 and 26).

This prevents the zero-order light of the phase modulator from being superimposed on the first reproduced image.

Therefore, the contrast of the first reproduced image can be improved. Further, it is possible to improve the reproducibility of the brightness of the input image.

Furthermore, in the image display device (1A and 1B) as an embodiment, the partial region of the first reproduced image does not satisfy the maximum diffraction angle limitation of the phase modulator, and the control unit (6A and 6B) calculates the target total light amount of the first reproduced image on the basis of the input image, and performs control to increase the light emission amount of the light emitting unit or control to increase the total light amount of the first reproduced image by the amplitude modulator (20) that performs spatial light amplitude modulation on the first reproduced image in a case where the maximum total light amount of the first reproduced image by the phase modulator is less than the target total light amount.

As a result, it is possible to increase the total light amount of the first reproduced image by the control of the light emitting unit or the amplitude modulator in response to a case where it is predicted that the total modulated light amount of the first reproduced image becomes darker than the target total light amount due to the fact that the partial region of the first reproduced image does not satisfy the maximum diffraction angle limitation and the maximum total light amount of the first reproduced image becomes less than the incident light amount.

Therefore, even in a case where a partial region of the first reproduced image does not satisfy the maximum diffraction angle limitation and the maximum total light amount of the first reproduced image is less than the incident light amount, the total light amount of the target image can be appropriately reproduced for the display image, and the reproducibility of the display image with respect to the target image can be improved.

Furthermore, in the image display device as an embodiment, the control unit (1A and 1B) calculates the target total light amount of the first reproduced image on the basis of the input image, and performs control to cause the phase modulator to execute spatial light phase modulation for irradiating the second reproduced image region with light corresponding to the light amount determined on the basis of the target total light amount, the partial region of the second reproduced image does not satisfy the maximum diffraction angle limitation of the phase modulator, and the control unit performs control to decrease the light emission amount of the light emitting unit or control to decrease the total light amount of the first reproduced image by the amplitude modulator that performs spatial light amplitude modulation on the first reproduced image in a case where "(Aq - Bq) > L2" is satisfied when Aq represents the incident light amount to the phase modulator, Bq represents the target total light amount, and L2 represents the maximum total light amount of the second reproduced image by the phase modulator.

As a result, it is possible to reduce the total light amount of the first reproduced image by the control of the light emitting unit or the amplitude modulator in a case where it is predicted that the total modulated light amount of the first reproduced image becomes brighter than the target total light amount because the light for achieving the target total light amount cannot be completely discarded due to the partial region of the second reproduced image not satisfying the maximum diffraction angle limitation.

Therefore, even in a case where the light for achieving the target total light amount cannot be completely discarded due to the partial region of the second reproduced image not satisfying the maximum diffraction angle limitation, the total light amount of the target image can be appropriately reproduced for the display image, and the reproducibility of the display image with respect to the target image can be improved.

Furthermore, in the image display device as an embodiment, the control unit calculates the target total light amount of the first reproduced image on the basis of the input image, and performs discarded light control of causing the phase modulator to execute spatial light phase modulation for irradiating the second reproduced image region with light corresponding to the light amount determined on the basis of the target total light amount, the partial region of the first reproduced image does not satisfy the maximum diffraction angle limitation of the phase modulator, and the control unit is configured to, in a case where a plurality of frames of an image is input, and there is a frame in which the maximum total light amount of the first reproduced image by the phase modulator is less than the target total light amount, correct the amount of light with which the second reproduced image region is irradiated by the discarded light control in the increasing direction for frames past the frame (see Fig. 23).

As a result, in a case where the partial region of the first reproduced image does not satisfy the maximum diffraction angle limitation and the maximum total light amount of the first reproduced image is less than the incident light amount, in a case where there is a frame (dark frame) in which the total modulated light amount of the first reproduced image becomes darker than the target total light amount in the prefetched frame, the past frames are controlled to be darker than the frame, and the darkness of the dark frame becomes less noticeable.

Therefore, it is possible to improve the reproducibility of the display image with respect to the target image.

Furthermore, in the image display device as an embodiment, the control unit calculates the target total light amount of the first reproduced image on the basis of the input image, and performs discarded light control of causing the phase modulator to execute spatial light phase modulation for irradiating the second reproduced image region with light corresponding to the light amount determined on the basis of the target total light amount, the partial region of the second reproduced image does not satisfy the maximum diffraction angle limitation of the phase modulator, and the control unit is configured to, in a case where a plurality of frames of an image is input, and there is a frame satisfying "(Aq - Bq) > L2" when Aq represents the incident light amount to the phase modulator, Bq represents the target total light amount, and L2 represents the maximum total light amount of the second reproduced image by the phase modulator, correct the amount of light with which the second reproduced image region is irradiated by the discarded light control in the decreasing direction for frames past the frame.

As a result, in a case where there is a frame (bright frame) in which the total modulated light amount of the first reproduced image becomes brighter than the target total light amount in the prefetched frame due to a partial region of the second reproduced image not satisfying the maximum diffraction angle limitation, the past frames are controlled to be brighter than the frame, and the brightness of the bright frame can be made less noticeable.

Therefore, it is possible to improve the reproducibility of the display image with respect to the target image.

In addition, the image display device (1D) as an embodiment is configured to generate a first reproduced image of each wavelength band in the same first reproduced image region by performing spatial light phase modulation on a plurality of types of light having different wavelength bands, and the control unit (6D) performs control to calculate a target total light amount of the first reproduced image on the basis of the input image for each wavelength band and execute spatial light phase modulation for irradiating the second reproduced image region with light corresponding to a light amount determined on the basis of the target total light amount for each wavelength band.

As a result, for example, in a case where a color image is displayed using a plurality of types of light having different wavelength bands such as R, G, and B, it is possible to change the light amount to be discarded to the second reproduced image side according to the magnitude of the target total light amount for each wavelength band.

Therefore, the total light amount of the target image can be appropriately reproduced for the display image by the color image, and the reproducibility of the display image with respect to the target image can be improved.

In addition, it is possible to improve the reproducibility of the white balance for the display image.

Furthermore, in the image display device as an embodiment, the second reproduced image region is determined for each wavelength band, and the second reproduced image region having a shorter wavelength light has a position in the image plane direction closer to the irradiation region of the zero-order light of the phase modulator (see Fig. 30).

The diffraction angle in the phase modulator depends on the wavelength of incident light, and light having a shorter wavelength is more difficult to bend. According to the above configuration, with respect to light having a short wavelength, light can be completely discarded to the second reproduced image region without largely separating the second reproduced image region from the phase modulator in the optical axis direction.

Therefore, it is possible to downsize the device by reducing the size of the optical system.

Furthermore, in the image display device as an embodiment, a plurality of second reproduced image regions is defined at different positions in the image plane direction, and the control unit causes the phase modulator to execute spatial light phase modulation for generating the second reproduced image in each of the second reproduced image regions (see Fig. 31).

As described above, with the configuration in which the second reproduced image is generated in each of the plurality of second reproduced image regions in the image plane direction, that is, the light is discarded in each of the plurality of second reproduced image regions, the distance from the phase modulator to the second reproduced image region in the optical axis direction can be shortened as compared with the case of discarding the light in one second reproduced image region.

Therefore, it is possible to downsize the device by reducing the size of the optical system.

In addition, by discarding the light in each of the plurality of second reproduced image regions, the light can be discarded while avoiding the region where the temperature rise is desired to be suppressed. Furthermore, it is possible to prevent stray light from being generated when the light of the second reproduced image hits a region where black coating is not applied.

Note that the effects described in the present specification are merely examples and are not limited, and other effects may be provided.

### <7. Present Technology>

The present technology can also adopt the following configurations.
(1) An image display device including:
   a light emitting unit that emits light;
   a phase modulator that performs spatial light phase modulation on incident light from the light emitting unit;
   a control unit that causes the phase modulator to execute spatial light phase modulation for generating a first reproduced image in a first reproduced image region and a second reproduced image in a second reproduced image region having a position in an image plane direction different from that of the first reproduced image region as a reproduced image generated by the spatial light phase modulation for the incident light;
   a projection lens that projects the first reproduced image; and
   a light shielding unit that shields the second reproduced image such that the second reproduced image is not projected by the projection lens.
(2) The image display device according to (1),
   in which the control unit is configured to
   calculate a target total light amount of the first reproduced image on the basis of an input image, and cause the phase modulator to execute spatial light phase modulation for irradiating the second reproduced image region with light corresponding to a light amount determined on the basis of the target total light amount.
(3) The image display device according to (2),
   in which the control unit is configured to
   acquire a total light amount of a light amount distribution formed in the first reproduced image region as an actual total light amount in a case where the spatial light phase modulation by the phase modulator is not performed on the incident light, and cause the phase modulator to execute spatial light phase modulation for irradiating the second reproduced image region with light corresponding to a difference light amount calculated as a difference between the target total light amount and the actual total light amount.
(4) The image display device according to any one of (1) to (3),
   in which an entire region of the first reproduced image satisfies a maximum diffraction angle limitation of the phase modulator.
(5) The image display device according to any one of (1) to (3),
   in which an entire region of the second reproduced image satisfies a maximum diffraction angle limitation of the phase modulator.
(6) The image display device according to any one of (1) to (3),
   in which entire regions of the first reproduced image and the second reproduced image satisfy a maximum diffraction angle limitation of the phase modulator.
(7) The image display device according to any one of (1) to (3),
   in which an entire region of the first reproduced image satisfies a limitation of an upper limit diffraction angle by an angle smaller than a maximum diffraction angle of the phase modulator.
(8) The image display device according to any one of (1), (2), (3), and (5),
   in which the control unit is configured to
   calculate a target light amount distribution of the first reproduced image on the basis of an input image, specify a region on the phase modulator where light cannot be completely bent into the first reproduced image region in a case where the target light amount distribution is reproduced in the first reproduced image region as a non-modulatable region, and cause the phase modulator to execute spatial light phase modulation for irradiating the second reproduced image region with incident light to the non-modulatable region.
(9) The image display device according to any one of (1) to (8),
   in which a light flux of the first reproduced image is emitted in a direction different from a light flux of zero-order light of the phase modulator.
(10) The image display device according to any one of (1), (2), (3), (5), and (8),
   in which a partial region of the first reproduced image does not satisfy a maximum diffraction angle limitation of the phase modulator, and
   the control unit is configured to
   calculate a target total light amount of the first reproduced image on the basis of an input image, and perform control to increase a light emission amount of the light emitting unit or control to increase a total light amount of the first reproduced image by an amplitude modulator that performs spatial light amplitude modulation on the first reproduced image in a case where a maximum total light amount of the first reproduced image by the phase modulator is less than the target total light amount.
(11) The image display device according to any one of (1), (2), (3), (4), and (7),
   in which the control unit is configured to
   calculate a target total light amount of the first reproduced image on the basis of an input image, and perform control to cause the phase modulator to execute spatial light phase modulation for irradiating the second reproduced image region with light corresponding to a light amount determined on the basis of the target total light amount,
   a partial region of the second reproduced image does not satisfy a maximum diffraction angle limitation of the phase modulator, and
   the control unit is configured to
   perform control to decrease a light emission amount of the light emitting unit or control to decrease a total light amount of the first reproduced image by an amplitude modulator that performs spatial light amplitude modulation on the first reproduced image in a case where "(Aq - Bq) > L2" is satisfied when Aq represents an incident light amount to the phase modulator, Bq represents the target total light amount, and L2 represents a maximum total light amount of the second reproduced image by the phase modulator.
(12) The image display device according to any one of (1), (2), (3), (5), and (8),
   in which the control unit is configured to
   calculate a target total light amount of the first reproduced image on the basis of an input image, and perform discarded light control of causing the phase modulator to execute spatial light phase modulation for irradiating the second reproduced image region with light corresponding to a light amount determined on the basis of the target total light amount,
   a partial region of the first reproduced image does not satisfy a maximum diffraction angle limitation of the phase modulator, and
   the control unit is configured to,
   in a case where a plurality of frames of an image is input, and there is a frame in which a maximum total light amount of the first reproduced image by the phase modulator is less than the target total light amount, correct an amount of light with which the second reproduced image region is irradiated by the discarded light control in an increasing direction for a frame past the frame.
(13) The image display device according to any one of (1), (2), (3), (4), and (7),
   in which the control unit is configured to
   calculate a target total light amount of the first reproduced image on the basis of an input image, and perform discarded light control of causing the phase modulator to execute spatial light phase modulation for irradiating the second reproduced image region with light corresponding to a light amount determined on the basis of the target total light amount,
   a partial region of the second reproduced image does not satisfy a maximum diffraction angle limitation of the phase modulator, and
   the control unit is configured to,
   in a case where a plurality of frames of an image is input, and there is a frame satisfying "(Aq - Bq) > L2" when Aq represents an incident light amount to the phase modulator, Bq represents the target total light amount, and L2 represents a maximum total light amount of the second reproduced image by the phase modulator, correct an amount of light with which the second reproduced image region is irradiated by the discarded light control in a decreasing direction for a frame past the frame.
(14) The image display device according to any one of (1) to (13),
   in which the image display device is configured to generate a first reproduced image of each wavelength band in a same first reproduced image region by performing spatial light phase modulation on a plurality of types of light having different wavelength bands, and
   the control unit is configured to
   calculate a target total light amount of the first reproduced image on the basis of an input image for each wavelength band, and perform control to execute spatial light phase modulation for irradiating the second reproduced image region with light corresponding to a light amount determined on the basis of the target total light amount for each wavelength band.
(15) The image display device according to (14),
   in which the second reproduced image region is determined for each wavelength band, and
   a position in the image plane direction is set closer to an irradiation region of zero-order light of the phase modulator as the second reproduced image region has a shorter wavelength light.
(16) The image display device according to any one of (1) to (15),
   in which a plurality of the second reproduced image region is defined at different positions in the image plane direction, and
   the control unit is configured to
   cause the phase modulator to execute spatial light phase modulation for generating the second reproduced image in each second reproduced image region.

### REFERENCE SIGNS LIST

1, 1A, 1B, 1C, 1D IMAGE DISPLAY DEVICE
2, 2D Light emitting unit
3 Collimation lens
4 Phase modulator
5 Projection lens
6, 6A, 6B, 6D Control unit
7 Light shielding unit
Im Reproduced image
Sc Screen
Sp Reproduction surface
Im1 First reproduced image
Im2 Second reproduced image
11, 11A, 11r, 11g, 11b Light emission driving unit
12, 12r, 12g, 12b Phase pattern calculation unit
13, 13D Drive signal generation unit
14 Modulator driving unit
15, 15B Light amount control unit
20 Amplitude modulator
21 Modulator driving unit
2r, 2g, 2b Light emitting element
31r, 31g, 31b Collimation lens
32 First dichroic mirror
33 Second dichroic mirror
34 Mirror
Ar, Ar1, Ar2, Ar3 Region
ArU Upper region
ArD Lower region
35 Heat sink

## Claims

1. An image display device comprising:
a light emitting unit that emits light;
a phase modulator that performs spatial light phase modulation on incident light from the light emitting unit;
a control unit that causes the phase modulator to execute spatial light phase modulation for generating a first reproduced image in a first reproduced image region and a second reproduced image in a second reproduced image region having a position in an image plane direction different from that of the first reproduced image region as a reproduced image generated by the spatial light phase modulation for the incident light;
a projection lens that projects the first reproduced image; and
a light shielding unit that shields the second reproduced image such that the second reproduced image is not projected by the projection lens.

2. The image display device according to claim 1,
wherein the control unit is configured to
calculate a target total light amount of the first reproduced image on a basis of an input image, and cause the phase modulator to execute spatial light phase modulation for irradiating the second reproduced image region with light corresponding to a light amount determined on a basis of the target total light amount.

3. The image display device according to claim 2,
wherein the control unit is configured to
acquire a total light amount of a light amount distribution formed in the first reproduced image region as an actual total light amount in a case where the spatial light phase modulation by the phase modulator is not performed on the incident light, and cause the phase modulator to execute spatial light phase modulation for irradiating the second reproduced image region with light corresponding to a difference light amount calculated as a difference between the target total light amount and the actual total light amount.

4. The image display device according to claim 1,
wherein an entire region of the first reproduced image satisfies a maximum diffraction angle limitation of the phase modulator.

5. The image display device according to claim 1,
wherein an entire region of the second reproduced image satisfies a maximum diffraction angle limitation of the phase modulator.

6. The image display device according to claim 1,
wherein entire regions of the first reproduced image and the second reproduced image satisfy a maximum diffraction angle limitation of the phase modulator.

7. The image display device according to claim 1,
wherein an entire region of the first reproduced image satisfies a limitation of an upper limit diffraction angle by an angle smaller than a maximum diffraction angle of the phase modulator.

8. The image display device according to claim 1,
wherein the control unit is configured to
calculate a target light amount distribution of the first reproduced image on a basis of an input image, specify a region on the phase modulator where light cannot be completely bent into the first reproduced image region in a case where the target light amount distribution is reproduced in the first reproduced image region as a non-modulatable region, and cause the phase modulator to execute spatial light phase modulation for irradiating the second reproduced image region with incident light to the non-modulatable region.

9. The image display device according to claim 1,
wherein a light flux of the first reproduced image is emitted in a direction different from a light flux of zero-order light of the phase modulator.

10. The image display device according to claim 1,
wherein a partial region of the first reproduced image does not satisfy a maximum diffraction angle limitation of the phase modulator, and
the control unit is configured to
calculate a target total light amount of the first reproduced image on a basis of an input image, and perform control to increase a light emission amount of the light emitting unit or control to increase a total light amount of the first reproduced image by an amplitude modulator that performs spatial light amplitude modulation on the first reproduced image in a case where a maximum total light amount of the first reproduced image by the phase modulator is less than the target total light amount.

11. The image display device according to claim 1,
wherein the control unit is configured to
calculate a target total light amount of the first reproduced image on a basis of an input image, and perform control to cause the phase modulator to execute spatial light phase modulation for irradiating the second reproduced image region with light corresponding to a light amount determined on a basis of the target total light amount,
a partial region of the second reproduced image does not satisfy a maximum diffraction angle limitation of the phase modulator, and
the control unit is configured to
perform control to decrease a light emission amount of the light emitting unit or control to decrease a total light amount of the first reproduced image by an amplitude modulator that performs spatial light amplitude modulation on the first reproduced image in a case where "(Aq - Bq) > L2" is satisfied when Aq represents an incident light amount to the phase modulator, Bq represents the target total light amount, and L2 represents a maximum total light amount of the second reproduced image by the phase modulator.

12. The image display device according to claim 1,
wherein the control unit is configured to
calculate a target total light amount of the first reproduced image on a basis of an input image, and perform discarded light control of causing the phase modulator to execute spatial light phase modulation for irradiating the second reproduced image region with light corresponding to a light amount determined on a basis of the target total light amount,
a partial region of the first reproduced image does not satisfy a maximum diffraction angle limitation of the phase modulator, and
the control unit is configured to,
in a case where a plurality of frames of an image is input, and there is a frame in which a maximum total light amount of the first reproduced image by the phase modulator is less than the target total light amount, correct an amount of light with which the second reproduced image region is irradiated by the discarded light control in an increasing direction for a frame past the frame.

13. The image display device according to claim 1,
wherein the control unit is configured to
calculate a target total light amount of the first reproduced image on a basis of an input image, and perform discarded light control of causing the phase modulator to execute spatial light phase modulation for irradiating the second reproduced image region with light corresponding to a light amount determined on a basis of the target total light amount,
a partial region of the second reproduced image does not satisfy a maximum diffraction angle limitation of the phase modulator, and
the control unit is configured to,
in a case where a plurality of frames of an image is input, and there is a frame satisfying "(Aq - Bq) > L2" when Aq represents an incident light amount to the phase modulator, Bq represents the target total light amount, and L2 represents a maximum total light amount of the second reproduced image by the phase modulator, correct an amount of light with which the second reproduced image region is irradiated by the discarded light control in a decreasing direction for a frame past the frame.

14. The image display device according to claim 1,
wherein the image display device is configured to generate a first reproduced image of each wavelength band in a same first reproduced image region by performing spatial light phase modulation on a plurality of types of light having different wavelength bands, and
the control unit is configured to
calculate a target total light amount of the first reproduced image on a basis of an input image for each wavelength band, and perform control to execute spatial light phase modulation for irradiating the second reproduced image region with light corresponding to a light amount determined on a basis of the target total light amount for each wavelength band.

15. The image display device according to claim 14,
wherein the second reproduced image region is determined for each wavelength band, and
a position in the image plane direction is set closer to an irradiation region of zero-order light of the phase modulator as the second reproduced image region has a shorter wavelength light.

16. The image display device according to claim 1,
wherein a plurality of the second reproduced image region is defined at different positions in the image plane direction, and
the control unit is configured to
cause the phase modulator to execute spatial light phase modulation for generating the second reproduced image in each second reproduced image region.
